(19) Europäisches Patentamt / European Patent Office / Office européen des brevets

(11) **EP 2 425 504 B1**

(12) **EUROPÄISCHE PATENTSCHRIFT**

(45) Veröffentlichungstag und Bekanntmachung des Hinweises auf die Patenterteilung:
**20.12.2017 Patentblatt 2017/51**

(21) Anmeldenummer: **10720139.4**

(22) Anmeldetag: **28.04.2010**

(51) Int Cl.:
*H01S 3/06* *(2006.01)*    *H01S 3/07* *(2006.01)*
*H01S 3/08* *(2006.01)*    *H01S 3/081* *(2006.01)*
*H01S 3/083* *(2006.01)*    *H01S 3/10* *(2006.01)*

(86) Internationale Anmeldenummer:
**PCT/EP2010/055755**

(87) Internationale Veröffentlichungsnummer:
**WO 2010/145878 (23.12.2010 Gazette 2010/51)**

(54) **LASERVERSTÄRKERSYSTEM**

LASER AMPLIFIER SYSTEM

SYSTÈME D'AMPLIFICATEUR LASER

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.04.2009 DE 102009020768**

(43) Veröffentlichungstag der Anmeldung:
**07.03.2012 Patentblatt 2012/10**

(73) Patentinhaber: **Deutsches Zentrum für Luft- und Raumfahrt e.V.**
**51147 Köln (DE)**

(72) Erfinder:
- **GIESEN, Adolf**
  **72631 Aichtal (DE)**
- **MENDE, Jens**
  **70771 Leinfelden-Echterdingen (DE)**
- **SPINDLER, Gerhard**
  **79761 Waldshut-Tiengen (DE)**
- **SPEISER, Jochen**
  **70435 Stuttgart (DE)**

(74) Vertreter: **Hoeger, Stellrecht & Partner**
**Patentanwälte mbB**
**Uhlandstrasse 14c**
**70182 Stuttgart (DE)**

(56) Entgegenhaltungen:
EP-A1- 1 677 394    EP-A2- 2 031 712
US-A1- 2009 059 974    US-A1- 2009 268 775
US-A1- 2010 027 572

- VOSS A ET AL: "Intra-cavity beam shaping for high power thin-disk lasers" PROCEEDINGS OF THE INTERNATIONAL SOCIETY FOR OPTICAL ENGINEERING (SPIE), SPIE, USA, Bd. 6346, 26. April 2007 (2007-04-26), Seiten 63461U-1, XP009113446 ISSN: 0277-786X
- MENDE J ET AL: "Concept of neutral gain modules for power scaling of thin-disk lasers" APPLIED PHYSICS B ; LASERS AND OPTICS, SPRINGER, BERLIN, DE LNKD-DOI:10.1007/S00340-009-3726-2, Bd. 97, Nr. 2, 12. September 2009 (2009-09-12), Seiten 307-315, XP019758912 ISSN: 1432-0649
- MENDE J ET AL: "Thin disk laser: power scaling to the kW regime in fundamental mode operation" PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, Bd. 7193, 25. Januar 2009 (2009-01-25), XP002598404 ISSN: 0277-786X
- HUNT J T ET AL: "Suppression of self-focusing through low-pass spatial filtering and relay imaging" APPLIED OPTICS USA, Bd. 17, Nr. 13, 1. Juli 1978 (1978-07-01), Seiten 2053-2057, XP002598405 ISSN: 0003-6935

**Beschreibung**

Die Erfindung betrifft ein Laserverstärkersystem umfassend einen Resonator mit optischen Resonatorelementen, die einen Verlauf eines sich längs einer optischen Achse ausbreitenden Resonatorstrahlungsfeldes festlegen, und mindestens ein laseraktives Medium.

Derartige Laserverstärkersysteme sind übliche Laserverstärkersysteme, wobei bei der Auslegung der Laserverstärkersysteme das Problem besteht, dass bei der Auslegung des Resonators das optische Verhalten des laseraktiven Mediums zu berücksichtigen ist und somit das sich ergebende Resonatorstrahlungsfeld stets von dem optischen Verhalten des laseraktiven Mediums abhängig ist.

Insbesondere dann, wenn das optische Verhalten des laseraktiven Mediums variiert, variiert somit auch das erhältliche Resonatorstrahlungsfeld, so dass die Auslegung des Resonators den sich variierenden optischen Eigenschaften des laseraktiven Mediums anzupassen ist.

EP 1 677 394 offenbart einen Laserverstärker und Laserresonator mit mehreren laseraktiven Medien. In einem Ausführungsbeispiel ist zwischen zwei Scheibenlaserkristallen ein Teleskop aus zwei sphärischen Hohlspiegeln als fokussierendes optisches Element für die Abbildung der Laserkristalle aufeinander angeordnet. Die Hohlspiegel weisen einen identischen Krümmungsradius auf und sind etwa im Abstand ihres halben Radius vom jeweils benachbarten Laserkristall angeordnet. Der Abstand zwischen den beiden Hohlspiegeln ist gleich dem Spiegelradius, wenn eine Abbildung ohne Brechkraftüberschuss erreicht werden soll. Durch Änderung des Abstands der Hohlspiegel voneinander kann gezielt sowohl ein positiver als auch ein negativer Brechkraftüberschuss erzeugt werden.

Der Erfindung liegt daher die Aufgabe zugrunde, ein Laserverstärkersystem der eingangs beschriebenen Art derart zu verbessern, dass die Auslegung des Resonators vereinfacht werden kann.

Diese Aufgabe wird bei der eingangs beschriebenen Art erfindungsgemäß durch ein Laserverstärkersystem gemäß Anspruch 1 gelöst.

Erfindungsgemäß ist der Resonator als aufgespaltener Resonator ausgebildet und weist einen sich ausgehend von einer ersten virtuellen Trennebene erstreckenden ersten Resonatorabschnitt und einen sich ausgehend von einer zweiten virtuellen Trennebene erstreckenden zweiten Resonatorabschnitt aufweist, dass die Resonatorabschnitte optisch so dimensioniert sind, dass das Resonatorstrahlungsfeld in jeder der virtuellen

Trennebenen denselben Resonatormoden entsprechende Strahlungsfeldzustände aufweist, dass zwischen der ersten und der zweiten virtuellen Trennebene eine optisch vom Resonator unabhängige Verstärkungseinheit angeordnet ist, welche das mindestens eine laseraktive Medium umfasst und welche die denselben Resonatormoden entsprechenden Strahlungsfeldzustände resonatormodenneutral koppelt.

Der Vorteil der erfindungsgemäßen Lösung ist darin zu sehen, dass die Verstärkungseinheit optisch vom Resonator unabhängig ist und somit die Dimensionierung des Resonators und die Festlegung der Resonatormoden unabhängig von den optischen Eigenschaften der Verstärkungseinheit erfolgen kann.

Gleichzeitig ist damit die Möglichkeit geschaffen, die Verstärkungseinheit unabhängig von dem Resonator aufzubauen und zu betreiben, so dass die Verstärkungseinheit ihrerseits ebenfalls unabhängig vom Resonator dimensioniert werden kann. Die erfindungsgemäße Lösung sieht vor, dass die Verstärkungseinheit mindestens ein Verstärkermodul umfasst, wobei in dem Verstärkermodul das mindestens eine laseraktive Medium vorgesehen ist.

Das mindestens eine Verstärkermodul kann dabei in unterschiedlichster Art und Weise ausgebildet sein. Dieses ist erfindungsgemäß so aufgebaut dass es insgesamt mit allen übrigen optischen Elementen der Verstärkungseinheit sich optisch resonatormodenneutral verhält, so dass das Verstärkermodul eine Einheit bildet, die vorzugsweise skalierbar in der Verstärkungseinheit, das heißt mehrfach in der Verstärkungseinheit, angeordnet werden kann.

Um insgesamt zu erreichen, dass die Verstärkungseinheit sich resonatormodenneutral verhält, ist vorzugsweise vorgesehen, dass das mindestens eine sich resonatormodenneutral verhaltende Verstärkermodul optisch neutral mit den virtuellen Trennebenen gekoppelt ist. Die erfindungsgemäße Lösung sieht dabei vor, dass jedes Verstärkermodul sich zwischen einer ersten virtuellen Modulendebene und einer zweiten virtuellen Modulendebene erstreckt und optisch so dimensioniert ist, dass dieses im Betrieb des Laserverstärkersystems bei mindestens einer mittleren Leistung innerhalb eines vorgesehenen Leistungsbereichs ein Strahlungsfeldzustände repräsentierendes Intensitätsprofil eines Verstärkermodulstrahlungsfeldes in einer der Modulendebenen in die andere der Modulendebenen in mindestens einem Zentralbereich intensitätsprofilformerhaltend transformiert und dass eine erste der Modulendebenen mit der ersten Trennebene und eine zweite der Modulendebenen mit der zweiten Trennebene gekoppelt ist.

Mit dieser Lösung ist somit sichergestellt, dass das Verstärkermodul zwischen den beiden Modulendebenen eine Transformation der Strahlungsfeldzustände vornimmt, welche die Resonatormoden aufgrund der intensitätsprofilformerhaltenden Transformation nicht negativ beeinflusst.

Ferner ist erfindungsgemäß vorgesehen, dass mindestens in dem Zentralbereich die einzelne Strahlungsfeldzustandswerte repräsentierenden Intensitätswerte des auf seinen Maximalwert normierten Intensitätsprofils in den jeweils durch Abbildung einander zugeordneten Orten in den Modulendebenen um maximal 20% des Maximalwerts voneinander abweichen.

Durch diese Bedingung ist festgelegt, dass die einzelnen Intensitätswerte des Intensitätsprofils nur eine begrenzte Abweichung voneinander aufweisen, durch welche die Resonatormoden keine grundlegenden Veränderungen erfahren.

Günstig ist es, wenn mindestens in dem Zentralbereich die einzelne Strahlungsfeldzustandswerte repräsentierenden Intensitätswerte des Intensitätsprofils in den jeweils durch Abbildung einander zugeordneten Orten in den Modulendebenen um maximal 15% des Maximalwerts voneinander abweichen. Noch besser ist es, wenn mindestens in dem Zentralbereich die einzelne Strahlungsfeldzustandswerte repräsentierenden Intensitätswerte des Intensitätsprofils in den jeweils durch Abbildung einander zugeordneten Orten in den Modulendebenen um maximal 10% des Maximalwerts voneinander abweichen und noch vorteilhafter ist es, wenn mindestens in dem Zentralbereich die einzelne Strahlungsfeldzustandswerte repräsentierenden Intensitätswerte des Intensitätsprofils in den jeweils durch Abbildung einander zugeordneten Orten in den Modulendebenen um maximal 5% des Maximalwerts voneinander abweichen.

Unter dem Begriff der Zuordnung der einzelnen Orte durch Abbildung ist dabei zu verstehen, dass im Falle einer exakten Abbildung die einzelnen Orte einander eindeutig zugeordnet sind, im Fall einer nicht scharfen Abbildung die Zuordnung dadurch erfolgt, dass bei dem unscharfen Abbild eines Ortes einer Modulendebene in der anderen Modulendebene der Schwerpunkt des unscharfen Bildes dieses Ortes als zugeordneter Ort zu betrachten ist. Dadurch ist erfindungsgemäß gewährleistet, dass das mindestens eine Verstärkermodul das auf seinen Maximalwert normierte Intensitätsprofil in der einen virtuellen Modulendebene zur anderen virtuellen Modulendebene im Wesentlichen intensitätsprofilerhaltend transformiert.

Ferner sieht eine weitere erfindungsgemäße vorteilhafte Bedingung für das Verhalten des Verstärkermoduls vor, dass das mindestens eine Verstärkermodul ein Strahlungsfeldzustände repräsentierendes Phasenprofil von einer Modulendebene zur anderen Modulendebene mindestens in einem Zentralbereich phasenprofilformerhaltend transformiert.

Diese weitere Bedingung stellt eine zusätzliche Präzisierung für ein optimales optisches Verhalten des Verstärkermoduls mit unwesentlicher Beeinflussung der Resonatormoden dar. Erfindungsgemäß ist. die Differenz der Phasenwerte der Phasenprofile in den jeweils durch Abbildung einander zugeordneten Orten in den Modulendebenen an jeder Stelle kleiner als 4 rad. Besser ist es, wenn die Differenz der Phasenprofile in den Modulendebenen an jeder Stelle kleiner als 3 rad ist.

Noch besser ist es, wenn die Differenz der Phasenprofile in den Modulendebenen an jeder Stelle kleiner als 2 rad ist und besonders günstig ist es, wenn die Differenz der Phasenprofile in den Modulendebenen an jeder Stelle kleiner als 1 rad ist.

Der Zentralbereich wurde im Zusammenhang der bisherigen Erläuterung der einzelnen Ausführungsbeispiele nicht näher definiert.

Zweckmäßigerweise ist der Zentralbereich so zu definieren, dass der Zentralbereich dem kleinsten Querschnittsbereich des Verstärkermodulstrahlungsfeldes entspricht, der 80% der Gesamtleistung des Verstärkermodulstrahlungsfeldes umfasst.

Im Zusammenhang mit der Anordnung der Verstärkermodule in der Verstärkungseinheit wurde bislang lediglich eine optische Kopplung derselben definiert.

Eine besonders günstige Lösung sieht vor, dass die Verstärkungseinheit ein Verstärkermodul umfasst, bei dem eine erste der Modulendebenen mit der ersten Trennebene und eine zweite der Modulendebenen mit der zweiten Trennebene optisch neutral gekoppelt sind, vorzugsweise zusammenfallen.

Ferner wurde bislang im Zusammenhang mit der Verstärkungseinheit lediglich mindestens ein Verstärkermodul vorgegeben.

Eine besonders günstige Lösung sieht vor, dass die Verstärkungseinheit mehrere Verstärkermodule umfasst. Bei dieser Lösung wird konsequent der Vorteil ausgenutzt, dass die Verstärkermodule selbst sich intensitätsprofilformerhaltend und gegebenenfalls auch noch vorteilhafterweise phasenprofilformerhaltend verhalten, so dass die Möglichkeit besteht, mehrere derartige, gegebenenfalls identisch aufgebaute Verstärkermodule, in einer Verstärkungseinheit einzusetzen.

Besonders günstig ist es dabei, wenn zwischen den Trennebenen mehrere eine Gesamtheit bildende Verstärkermodule aufeinanderfolgend angeordnet sind und wenn bei den aufeinanderfolgenden Verstärkermodulen jeweils eine erste Modulendebene mit einer zweiten Modulendebene optisch neutral gekoppelt ist und wenn bei der Gesamtheit der Verstärkermodule die erste Modulendebene eines ersten Verstärkermoduls mit einer der Trennebenen und die zweite Modulendebene des letzten Verstärkermoduls mit der anderen der Trennebenen optisch gekoppelt sind.

Eine besonders günstige Lösung sieht vor, dass bei den aufeinanderfolgenden Verstärkermodulen jeweils eine erste Modulendebene mit einer zweiten Modulendebene zusammenfällt und dass bei der Gesamtheit der Verstärkermodule die erste Modulendebene eines ersten Verstärkermoduls mit einer der Trennebenen und die zweite Modulendebene des letzten Verstärkermoduls mit der anderen der Trennebenen optisch neutral gekoppelt sind, vorzugsweise zusammenfallen.

Alternativ oder ergänzend zu den bislang beschriebenen Lösungen sieht eine vorteilhafte Ausführungsform eines erfindungsgemäßen Lasersystems vor, dass der Resonator als aufgespaltener Resonator ausgebildet ist und einen sich ausgehend von einer ersten virtuellen Trennebene erstreckenden ersten Resonatorabschnitt und einen sich ausgehend von einer zweiten virtuellen Trennebene erstreckenden zweiten Resonatorabschnitt aufweist, dass zwischen der ersten und der zweiten virtuellen Trennebene mindestens ein Verstärkermodul angeordnet ist, welches das mindestens eine laseraktive Medium umfasst, dass das mindestens eine Verstärkermodul so zwischen den Trennebenen angeordnet ist, dass eine erste Modulendebene des mindestens einen Verstärkermoduls mit der ersten Trennebene und eine zweite Modulendebene des mindestens einen Verstärkermoduls mit der zweiten Trennebene optisch neutral gekoppelt sind und dass das mindestens eine Verstärkermodul im Betrieb des Laserverstärkersystems bei mindestens einer mittleren Leistung innerhalb eines vorgesehenen Leistungsbereichs ein Verstärkermodulstrahlungsfeld zwischen den Modulendebenen ausbildet, welches mindestens in einem Zentralbereich die Strahlungsfeldzustände in den Modulendebenen optisch quasineutral miteinander koppelt.

Unter einer optisch quasineutralen, insbesondere neutralen, Kopplung des mindestens einen Verstärkermoduls mit der ersten Trennebene bzw. der zweiten Trennebene ist dabei zu verstehen, dass diese Kopplung zu einer im Wesentlichen identischen Transformation der Strahlungsfeldzustände in der jeweiligen Trennebene mit den Strahlungsfeldzuständen in der entsprechenden gekoppelten Modulendebene führt.

Beispielsweise ist vorzugsweise diese optisch quasineutrale Kopplung der Trennebenen derart definiert, dass eine ABCD-Strahl-Matrix, definiert gemäß A. E. Siegmann "Lasers", Univ. Science Books, Mill Valley, CA, USA, 1986, S. 581, ff., folgende Werte aufweist:

$$0{,}97 \quad < \ |A| \ < 1{,}03$$

$$-0{,}1 \ \mathrm{m} \ < \ B \ < 0{,}1 \ \mathrm{m}$$

$$-0{,}1 \ {}^{1}\!/_{\mathrm{m}} < \ C \ < 0{,}1 \ {}^{1}\!/_{\mathrm{m}}$$

$$0{,}97 \quad < \ |D| \ < 1{,}03.$$

Ein derartiges erfindungsgemäßes Laserverstärkersystem kann prinzipiell nur ein derartiges Verstärkermodul aufweisen.

Besonders günstig ist es, wenn zwischen den Trennebenen mehrere, eine Gesamtheit bildende Verstärkermodule aufeinanderfolgend angeordnet sind und wenn bei den aufeinanderfolgenden Verstärkermodulen jeweils eine erste Modulendebene mit einer zweiten Modulendebene optisch neutral gekoppelt ist und wenn bei der Gesamtheit der Verstärkermodule die erste Modulendebene eines ersten Verstärkermoduls mit einer der Trennebenen und die zweite Modulendebene des letzten Verstärkermoduls mit der anderen der Trennebenen optisch neutral gekoppelt sind.

Der einfachste Fall einer derartigen optisch neutralen Kopplung sieht vor, dass die jeweiligen Modulendebenen bzw. die jeweiligen Trennebenen und die Modulendebenen zusammenfallen.

Eine Lösung eines erfindungsgemäß ausgebildeten insbesondere quasineutralen Verstärkermoduls sieht vor, dass dieses ein optisches System darstellt, dessen ABCD-Matrix, definiert gemäß A. E. Siegmann "Lasers", Univ. Science Books, Mill Valley, CA, USA, 1986, S. 581, ff., die Werte

$$0{,}97 \quad < \ |A| \ < 1{,}03$$

$$-0{,}2 \ \mathrm{m} \ < \ B \ < 0{,}2 \ \mathrm{m}$$

$$-0{,}2 \ {}^{1}\!/_{\mathrm{m}} < \ C \ < 0{,}2 \ {}^{1}\!/_{\mathrm{m}}$$

$$0{,}97 \quad < \ |D| \ < 1{,}03$$

aufweist.

Hinsichtlich der Anordnung des laseraktiven Mediums innerhalb der Verstärkungseinheit oder innerhalb der Verstärkermodule wurden bislang keine näheren Angaben gemacht.

Das laseraktive Medium könnte beispielsweise in einem Gas oder in einer Flüssigkeit als Träger angeordnet sein.

Das erfindungsgemäße Lasersystem ist jedoch besonders geeignet für eine Ausführungsform, bei welcher das laseraktive Medium in mindestens einem Festkörper angeordnet ist.

Hinsichtlich der Form des mindestens einen Festkörpers sind dabei grundsätzlich beliebige Ausführungen denkbar.

Günstig ist es, wenn der mindestens eine Festkörper sich quer zur optischen Achse ausdehnt.

Grundsätzlich könnte dabei der mindestens eine Festkörper ein sich in Richtung der optischen Achse erstreckender Stab oder ein in Richtung der optischen Achse erstreckender Quader, beispielsweise bei einem Slab-Laser, sein.

Eine besonders günstige Lösung sieht vor, dass der mindestens eine Festkörper quer zur optischen Achse in jeder Richtung eine Ausdehnung aufweist, die größer, insbesondere ein Vielfaches größer, als die Ausdehnung in Richtung der optischen Achse ist.

Ein derartiger Festkörper hat den Vorteil, dass dadurch die Beeinflussung der Verstärkungseinheit bzw. des Verstärkermoduls durch das laseraktive Medium begrenzt, gegebenenfalls reduziert werden kann.

Dies gilt insbesondere für die Ausbildung einer sogenannten thermischen Linse in dem Festkörper.

Besonders günstig ist es, wenn der mindestens eine Festkörper plattenförmig ausgebildet ist.

Ein derartiger plattenförmig ausgebildeter Festkörper wirkt vorzugsweise so, dass er die Verstärkungseinheit bzw. das Verstärkermodul möglichst wenig optisch beeinflusst.

Alternativ dazu ist es aber auch denkbar, den mindestens einen Festkörper so auszubilden, dass er fokussierend oder defokussierend wirkt, das heißt definierte Abbildungseigenschaften im Zusammenhang mit der Verstärkungseinheit bzw. dem Verstärkermodul aufweist.

Prinzipiell kann dabei der mindestens eine Festkörper an beliebigen Stellen an dem Verstärkermodul zwischen den Modulendebenen angeordnet sein, wenn der Festkörper von dem Verstärkermodulstrahlungsfeld durchsetzt ist und somit in der Lage ist, dieses zu verstärken.

Prinzipiell kann dem laseraktiven Medium auf unterschiedliche Art und Weise die Energie für den optischen Verstärkungsprozess zugeführt werden. Im Fall eines optischen Pumpens des laseraktiven Mediums wird elektromagnetische Strahlung im Bereich eines Pumplichtflecks zugeführt um im laseraktiven Medium die laseraktiven Anregungszustände zu erreichen.

Eine besonders günstige Lösung sieht in diesem Fall vor, dass der mindestens eine Festkörper in einem Bereich des Verstärkermodulstrahlungsfeldes angeordnet ist, in welchem dessen Verstärkermodulstrahlungsfeldquerschnitt kleiner als ein Pumplichtfleck ist. Diese Lösung hat den Vorteil, dass damit eine optimale Ausnützung des Pumplichts erreichbar ist.

Hinsichtlich der Anordnung des mindestens einen Festkörpers relativ zu den optischen Elementen des Verstärkermoduls sind beliebige Anordnungen denkbar.

Insbesondere ist vorzugsweise vorgesehen, dass der mindestens eine Festkörper unkorreliert zu abbildenden optischen Elementen des Verstärkermoduls angeordnet ist, das heißt, dass der mindestens eine Festkörper in keiner definierten optischen Korrelation zu den optischen Elementen des Verstärkermoduls angeordnet sein muss, um wirksam zu sein.

Alternativ dazu ist es, insbesondere wenn definierte Verhältnisse im Bereich des Festkörpers und somit in dem Bereich des laseraktiven Mediums erforderlich sind, dass der mindestens eine Festkörper in einer Abbildungsebene des Verstärkermoduls angeordnet ist.

Die Abbildungsebene kann entsprechend der optischen Konfiguration des Verstärkermoduls an unterschiedlichen Stellen angeordnet sein. Beispielsweise ist es denkbar, als Abbildungsebene eine Modulendebene vorzusehen.

Eine besonders günstige Lösung sieht vor, dass die Abbildungsebene des Verstärkermoduls zwischen zwei Adaptierungszweigen angeordnet ist.

Vorzugsweise sieht eine Lösung, insbesondere eine Lösung mit mehreren Festkörpern, vor, dass mehrere Abbildungsebenen zwischen zwei oder mehreren Adaptierungszweigen angeordnet sind.

Die Adaptierungszweige werden vorzugsweise durch Teleskopoptiken gebildet, wobei diese Teleskopoptiken als Kepler-Teleskope, Galilei-Teleskope oder andere Teleskope, insbesondere auch Spiegelteleskope, ausgebildet sein können.

Im Fall von mehreren Abbildungsebenen ist es zweckmäßig, wenn zwischen zwei Abbildungsebenen ein Zwischenabbildungszweig angeordnet ist, welcher die Strahlungsfeldzustände der einen Abbildungsebene auf die der anderen Abbildungsebene definiert abbildet.

Insbesondere ist es dabei günstig, wenn der Zwischenabbildungszweig optisch neutral ausgebildet ist.

Um auch eine Korrektur der Phasenverhältnisse zum Erreichen eines quasineutralen Verhaltens des Verstärkermoduls vorsehen zu können, ist vorzugsweise in einer Abbildungsebene des Verstärkermoduls ein eine optische Weglänge variierendes Phasenkorrekturelement angeordnet.

Wenn mehrere Abbildungsebenen vorgesehen sind, können in mehreren Abbildungsebenen Phasenkorrekturelemente vorgesehen sein, insbesondere um eine Phasenkorrektur zu optimieren.

Dieses Phasenkorrekturelement kann in unterschiedlichster Art und Weise ausgebildet sein.

Beispielsweise könnte dieses Phasenkorrekturelement ein adaptiver Spiegel oder ein Element mit verschiedenen optischen Verzögerungsstrecken sein.

Hinsichtlich der Ausbildung des Resonators wurden im Zusammenhang mit der bisherigen Erläuterung der einzelnen Ausführungsbeispiele keine näheren Angaben gemacht.

So sieht eine besonders günstige Lösung vor, dass der Resonator ein stabiler Resonator ist.

Alternativ dazu ist es denkbar, dass der Resonator ein instabiler Resonator ist.

Im Fall eines instabilen Resonators ist vorzugsweise vorgesehen, dass die virtuellen Trennebenen in einem Bereich des instabilen Resonators liegen, der zu mindestens 70% in entgegengesetzten Richtungen von Wellenfronten durchlaufen ist.

Alternativ zum Vorsehen eines stabilen oder instabilen Resonators sieht eine weitere erfindungsgemäße Lösung vor, dass der Resonator ein Ringresonator ist.

Eine weitere zweckmäßige Ausführungsform sieht vor, dass der Resonator ein Hybridresonator ist.

Darüber hinaus wird die eingangs genannte Aufgabe auch durch ein Verfahren zum Aufbauen eines Laserverstärkersystems gemäß den Verfahrensansprüchen 14 und 15 gelöst.

Weitere Merkmale und Vorteile der Erfindung sind Gegenstand der nachfolgenden Beschreibung sowie der zeichnerischen Darstellung einiger Ausführungsbeispiele. In der Zeichnung zeigen:

Fig. 1      eine schematische Darstellung eines ersten Ausführungsbeispiels eines erfindungsgemäßen Laserverstärkersystems mit einem stabilen Resonator und einer Verstärkungseinheit;

Fig. 2      eine schematische Darstellung der Konfiguration des stabilen Resonators gemäß Fig. 1 im nicht aufgespaltenen Zustand, in welchem die virtuellen Trennebenen zusammenfallen;

Fig. 3 eine schematische Darstellung des erfindungsgemäßen Laserverstärkersystems mit mehreren, die Verstärkungseinheit bildenden Verstärkermodulen;

Fig. 4 eine schematische Darstellung eines ersten Ausführungsbeispiels eines erfindungsgemäßen Verstärkermoduls;

Fig. 5 eine Darstellung der jeweils auf einen Maximalwert normierten Intensitätsprofile in den Modulendebenen des Verstärkermoduls gemäß Fig. 4;

Fig. 6 eine Darstellung eines Quotienten der Intensitätsprofile in Fig. 5;

Fig. 7 eine Darstellung der Phasendifferenz der Phasenprofile in den Modulendebenen bei dem Verstärkermodul gemäß Fig. 4 im idealen Fall optischer Neutralität;

Fig. 8 eine Darstellung der Phasendifferenz der Phasenprofile gemäß Fig. 4 im Fall nicht idealer optischer Neutralität, d.h. Quasineutralität;

Fig. 9 eine Darstellung ähnlich Fig. 4 eines zweiten Ausführungsbeispiels eines erfindungsgemäßen Verstärkermoduls;

Fig. 10 eine Darstellung ähnlich eines dritten Ausführungsbeispiels eines erfindungsgemäßen Verstärkermoduls;

Fig. 11 eine Darstellung ähnlich Fig. 4 eines vierten Ausführungsbeispiels eines erfindungsgemäßen Verstärkermoduls;

Fig. 12 eine ausschnittsweise Darstellung ähnlich Fig. 11 eines fünften Ausführungsbeispiels eines erfindungsgemäßen Verstärkermoduls;

Fig. 13 eine ausschnittsweise Darstellung eines sechsten Ausführungsbeispiels eines erfindungsgemäßen Verstärkermoduls mit einem Phasenkorrekturelement;

Fig. 14 eine ausschnittsweise Darstellung ähnlich Fig. 13 eines siebten Ausführungsbeispiels eines erfindungsgemäßen Verstärkermoduls;

Fig. 15 eine Darstellung ähnlich Fig. 4 eines achten Ausführungsbeispiels eines erfindungsgemäßen Verstärkermoduls;

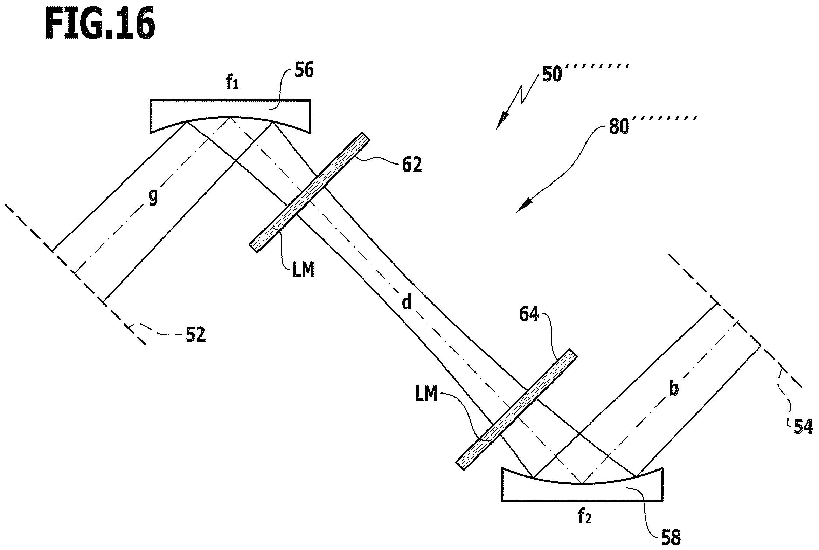

Fig. 16 eine Darstellung eines neunten Ausführungsbeispiels eines erfindungsgemäßen Verstärkermoduls;

Fig. 17 eine Darstellung eines zehnten Ausführungsbeispiels eines erfindungsgemäßen Verstärkermoduls;

Fig. 18 eine Darstellung eines zweiten Ausführungsbeispiels eines erfindungsgemäßen Resonators;

Fig. 19 eine Darstellung eines dritten Ausführungsbeispiels eines erfindungsgemäßen Resonators, ausgebildet als instabiler Resonator;

Fig. 20 eine Darstellung eines vierten Ausführungsbeispiels eines erfindungsgemäßen Resonators, dargestellt als instabiler Resonator;

Fig. 21 eine Darstellung eines fünften Ausführungsbeispiels eines erfindungsgemäßen Resonators, ausgebildet als Ringresonator und

Fig. 22 eine Darstellung eines sechsten Ausführungsbeispiels eines erfindungsgemäßen Resonators, dargestellt als Hybridresonator.

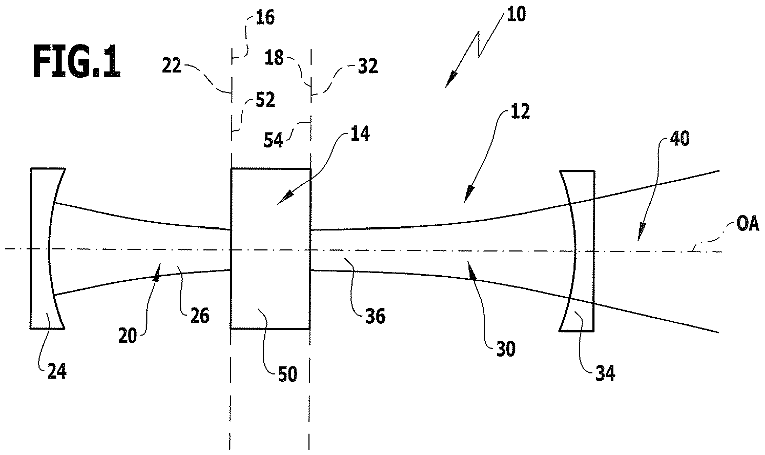

Ein in Fig. 1 dargestelltes erstes Ausführungsbeispiel eines längs einer optischen Achse OA angeordneten erfindungsgemäßen Laserverstärkersystems 10 umfasst einen Resonator 12 und eine vom Resonator 12 optisch unabhängig ausgebildete Verstärkereinheit 14, welche mit Endebenen 16 und 18 an Resonatorabschnitte des aufgespalten ausgebildeten Resonators unmittelbar optisch angrenzt.

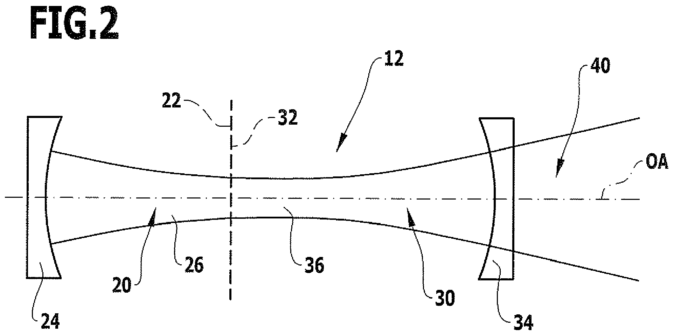

Unter einem gespalten ausgebildeten Resonator 12 ist dabei zu verstehen, dass sich Resonatorabschnitte 20, 30 jeweils ausgehend von zwei virtuellen Trennebenen 22 und 32 erstrecken, wobei die virtuellen Trennebenen 22 und 32 mit den Endebenen 16 und 18 der Verstärkereinheit zusammenfallen und wobei die Resonatorabschnitte 20, 30 eine optische Auslegung aufweisen, die davon ausgeht, dass die Verstärkereinheit 14 optisch nicht existiert und die virtuellen Trennebenen 22 und 32 zusammenfallen, wie in Fig. 2 dargestellt, so dass für die optische Auslegung der Resonatorabschnitte 20 und 30 mit den vorgesehenen Resonatormoden das optische Verhalten der Verstärkereinheit 14 nicht modenrelevant ist, das heißt die vorgesehenen Resonatormoden werden durch die Verstärkereinheit nicht geändert.

Vorzugsweise umfassen die Resonatorabschnitte 20, 30 optische Resonatorelemente 24, 34, welche die jeweils an die Trennebenen 22, 32 anschließenden Resonatorstrahlungsfeldabschnitte 26, 36 definieren.

Da die optische Auslegung des Resonators 12 unter der Prämisse erfolgt, dass die Trennebenen 22 und 32 zusammenfallen, weisen die Resonatorstrahlungsfeldabschnitte 26 und 36 in den Trennebenen 22 und 32 Strahlungsfeldzustände auf, welche in mindestens einem Betriebszustand eines vorgesehenen Betriebszustandsbereichs des Laserverstärkersystems zu identischen Modenverhältnissen in beiden Resonatorstrahlungsfeldabschnitten 26, 36 führen, das heißt, dass die sich in den Resonatorstrahlungsfeldabschnitten 26 und 36 ausbildenden Strahlungsfeldmoden den Strahlungsfeldmoden eines in Fig. 2 dargestellten Resonators 12 mit zusammenfallenden Trennebenen 22, 32 entsprechen.

Bei dem erfindungsgemäßen Laserverstärkersystem 10 ist somit die Ausbildung der Resonatorstrahlungsfeldabschnitte 26, 36 durch den optischen Aufbau der Resonatorabschnitte 20, 30, insbesondere durch deren optische Resonatorelemente 24, 34, definiert und unabhängig von einem optischen Verhalten der Verstärkereinheit 14, welche zwischen den Trennebenen 22, 32 in den aufgespaltenen Resonator 12 eingefügt ist.

Bei dem in Fig. 1 dargestellten einfachen Beispiel eines stabilen Resonators 12 sind die optischen Resonatorelemente 24 und 34 beispielsweise die Resonatorstrahlungsfeldabschnitte 26, 36 reflektierende und außerdem fokussierende Elemente, wobei zum Beispiel das optische Resonatorelement 34 nicht vollständig reflektierend ausgebildet ist, so dass ein Teil des Resonatorstrahlungsfeldabschnitts 36 in ein Austrittsstrahlungsfeld 40 ausgekoppelt wird.

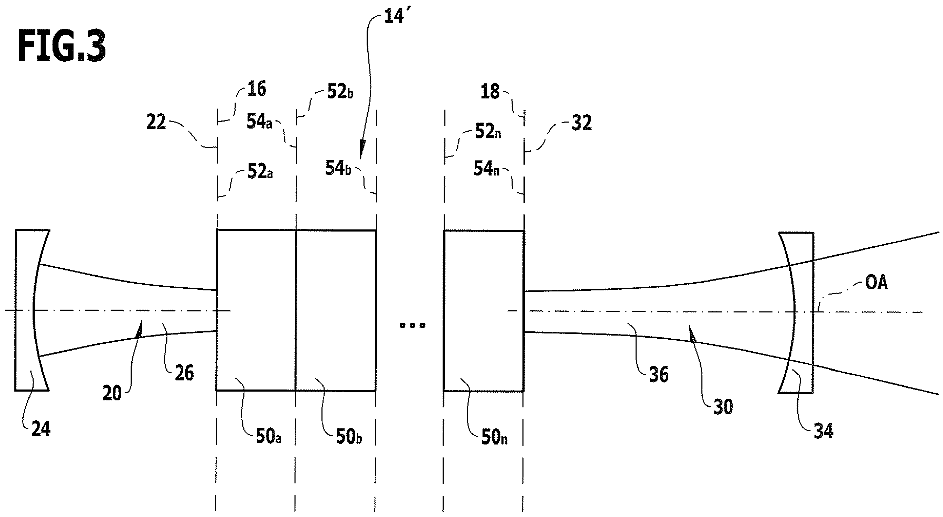

Die optisch resonatorunabhängig ausgebildete Verstärkereinheit 14 umfasst, wie in Fig. 1 dargestellt, beispielsweise ein Verstärkermodul 50 oder, wie in Fig. 3 dargestellt, mehrere Verstärkermodule 50, die zwischen den Trennebenen 22 und 32 liegen und die Verstärkereinheit 14 in Fig. 1 oder die Verstärkereinheit 14' in Fig. 3 bilden.

Dabei erstreckt sich jedes der Verstärkermodule 50 zwischen ersten und zweiten Modulendebenen 52 und 54, wobei bei der in Fig. 3 dargestellten Vielzahl in der Verstärkereinheit 14' hintereinander angeordneten Verstärkermodulen 50 bei aufeinanderfolgenden Verstärkermodulen, beispielsweise den Verstärkermodulen 50a und 50b, zweite Modulendebenen 54 mit nächstfolgenden ersten Modulendebenen 52, also beispielsweise die Modulendebenen 54a und 52b, zusammenfallen.

Ferner fällt die erste Modulendebene 52a des ersten Verstärkermoduls 50a einer Reihe aufeinanderfolgender Verstärkermodule 50 mit der Endebene 16 zusammen, während die zweite Modulendebene 54n des letzten Verstärkermoduls 50n mit der zweiten Endebene 18 zusammenfällt, so dass bei den mehreren Verstärkermodulen 50 der Verstärkereinheit 14' die im Bereich ihrer Modulendebene 52, 54 unmittelbar ineinander übergehenden Verstärkermodule 50 als Gesamtheit einerseits an den Resonatorabschnitt 20 und andererseits an den Resonatorabschnitt 30 anschließen.

Es besteht aber auch die Möglichkeit, die Verstärkereinheit 14 so auszubilden, dass zwischen Modulendebenen 52, 54 aufeinanderfolgender Verstärkermodule 50 oder zwischen einer Modulendebene 52, 54 eines einer Endebene 16, 18 nächstliegenden Verstärkermoduls 50 und dieser Endebene 16, 18 ein 1:1 Teleskop angeordnet ist, das eine optisch neutrale Transformation bewirkt, das heißt mit anderen Worten eine optisch quasineutrale Kopplung zur Folge hat.

In dem Formalismus der ABCD-Matrix wie er beispielsweise in A. E. Siegmann "Lasers", Univ. Science Books, Mill Valley, CA, USA, 1986, S. 581, ff. oder im YARIV, Imaging of coherent fields through lenslike systems, October 15, 1994/ Vol. 19, No. 20/ OPTICS LETTERS, page 1607 beschrieben ist, bedeutet dies, dass

$$0,97 \quad < |A| < 1,03$$

$$-0,2 \text{ m} \quad < \text{ B } < 0,2 \text{ m}$$

$$-0,2 \; {}^1\!/_{\text{m}} < \text{ C } < 0,2 \; {}^1\!/_{\text{m}}$$

$$0,97 \quad < |D| < 1,03.$$

oder besser

$$0,99 \quad < |A| < 1,01$$

$$-0,1 \text{ m} \quad < \text{ B } < 0,1 \text{ m}$$

$$-0,1 \; {}^1\!/_{\text{m}} < \text{ C } < 0,1 \; {}^1\!/_{\text{m}}$$

$$0,99 \quad < |D| < 1,01.$$

Bei der erfindungsgemäßen Lösung können nun die Verstärkermodule 50 optisch in unterschiedlichster Art und Weise aufgebaut sein.

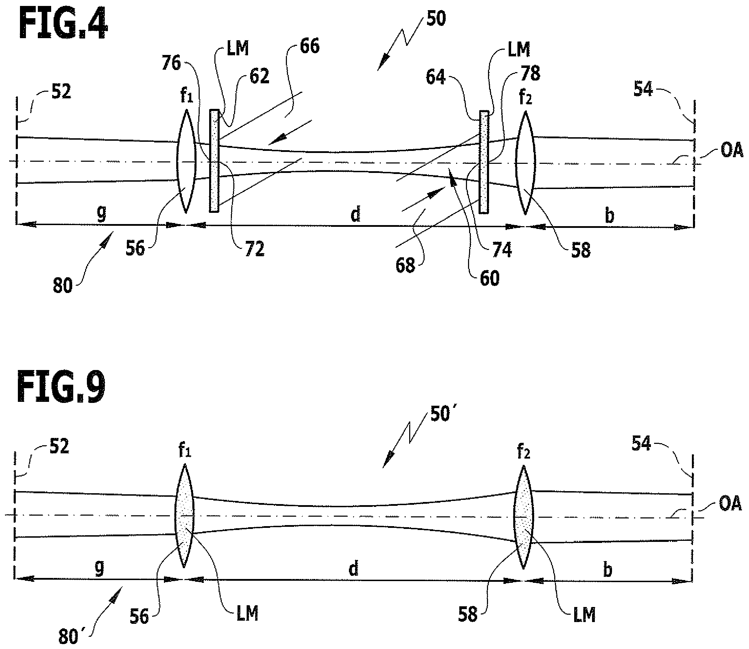

Bei einem ersten Ausführungsbeispiel umfasst das Verstärkermodul 50 optische Abbildungselemente 56 und 58, die ein Verstärkermodulstrahlungsfeld 60 definieren, welches sich zwischen den Modulendebenen 52 und 54 erstreckt und welches dabei ein optisch gepumptes laseraktive Medium LM durchsetzt, das beispielsweise in Festkörperplättchen 62 und 64 eingebettet ist, wobei die Festkörperplättchen 62 und 64 dünne Scheiben darstellen, wie sie bei Lasersystemen gemäß den europäischen Patentanmeldungen 0 632 551 A Verwendung finden. Dabei wurde die Kühlung der Festkörperplättchen 62 und 64 bei der Prinzipdarstellung gemäß Fig. 4 weggelassen.

Ein Pumpen des optisch verstärkenden laseraktiven Mediums LM in den Festkörperplättchen 62 und 64 erfolgt durch einfallende Pumplichtstrahlung 66 bzw. 68, die in den Festkörperplättchen 62 und 64 ein Pumplichtfleck 72 bzw. 74 erzeugt, der beispielsweise so groß ist, dass ein Verstärkermodulstrahlungsfeldquerschnitt 76 bzw. 78 in den Festkörperplättchen 62, 64 innerhalb des Pumplichtflecks 72 bzw. 74 liegt, wobei vorzugsweise der Pumplichtfleck 72, 74 so dimensioniert ist, dass dieser mindestens so groß ist wie der Verstärkermodulstrahlungsfeldquerschnitt 76 bzw. 78 ist, jedoch diesen vollständig umfasst.

Die Abbildungselemente 56 und 58 sowie die Festkörperplättchen 62 und 64 bilden insgesamt ein optisches System 80, welches als Ganzes den Verlauf des Verstärkermodulstrahlungsfeldes 60 zwischen den Modulendebenen 52, 54 definiert.

Dieses optische System 80 ist vorzugsweise so dimensioniert, dass die ABCD-Matrix gemäß dem theoretischen Ansatz in A. E. Siegmann "Lasers", Univ. Science Books, Mill Valley, CA, USA, 1986, S. 581, ff. oder in YARIV, Imaging of coherent fields through lenslike systems, October 15, 1994 / Vol. 19, No. 20 / OPTICS LETTERS, page 1607, die Werte:

$$0,97 \quad < |A| < 1,03$$

$$-0,2 \text{ m} \quad < \ B \ < 0,2 \text{ m}$$

$$-0,2 \ ^1/_m \quad < \ C \ < 0,2 \ ^1/_m$$

$$0,97 \quad < |D| < 1,03$$

vorzugsweise:

$$-0,98 \quad < |A| < 1,02$$

$$-0,15 \text{ m} \quad < \ B \ < 0,15 \text{ m}$$

$$-0,15 \ ^1/_m < \ C \ < 0,15 \ ^1/_m$$

$$-0,98 \quad < |D| < 1,02$$

noch besser:

$$-0,99 \quad < |A| < 1,01$$

$$-0,1 \text{ m} \quad < \ B \ < 0,1 \text{ m}$$

$$-0,1 \ ^1/_m \quad < \ C \ < 0,1 \ ^1/_m$$

$$-0,99 \quad < |D| < 1,01$$

aufweist.

Ein derartige Werte aufweisendes optisches System 80 wird im Rahmen der vorliegenden Patentanmeldung als optisch quasineutrales System bezeichnet.

Ein derartiges optisches System 80 ist ohne modenrelevanten optischen Einfluss auf die sich im Resonator 12 ausbildenden Resonatormoden im Resonatorstrahlungsfeld.

Bei dem erfindungsgemäßen optischen System 80 sind vorzugsweise die Festkörperplättchen 62 und 64 so ausgebildet, dass deren Erstreckung in Richtung der optischen Achse OA die Dicke der Festkörperplättchen 62, 64 darstellt, die quer zur optischen Achse OA eine Ausdehnung aufweisen, welche in jeder Richtung zur optischen Achse OA um mehr als einen Faktor 5 größer ist, vorzugsweise um einen Faktor 10 größer ist als die Dicke der Festkörperplättchen 62, 64.

Damit lässt sich die Beeinflussung des optischen Systems 80 durch die optischen Eigenschaften der Festkörperplättchen 62, 64 in für die Auslegung Grenzen halten.

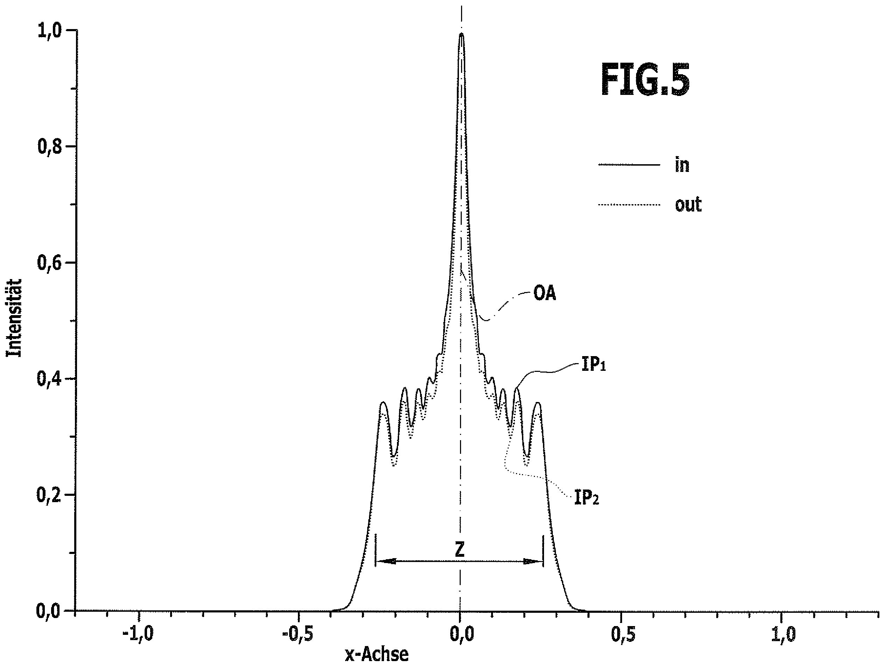

Wie in Fig. 4 dargestellt, umfasst das erste Ausführungsbeispiel des Verstärkermoduls 50 optische Abbildungselemente 56 und 58, die so zwischen den Modulendebenen 52, 54 angeordnet und hinsichtlich ihrer Abbildungseigenschaften in Abstimmung mit den Abbildungseigenschaften der Festkörperplättchen 62, 64 so dimensioniert sind, dass, wie in Fig. 5 dargestellt, ein einen Teil der Strahlungsfeldzustände darstellendes auf eine Maximalintensität in der jeweiligen Modulendebene 52, 54 normiertes Intensitätsprofil $IP_1$ in einer der Modulendebenen 52, 54 in ein auf eine Maximalintensität in der jeweiligen Modulendebene 52, 54 normiertes Intensitätsprofil $IP_2$ in der anderen der Modulendebenen 54, 52 intensitätsprofilformerhaltend transformiert wird, wobei insbesondere eine Intensitätsprofilformerhaltung in einem Zentralbereich Z erfolgt, welcher den kleinsten Querschnittsbereich des jeweiligen Intensitätsprofils $IP_1$, $IP_2$ darstellt, der 80% der optischen Gesamtleistung, noch besser 90% der optischen Gesamtleistung, umfasst.

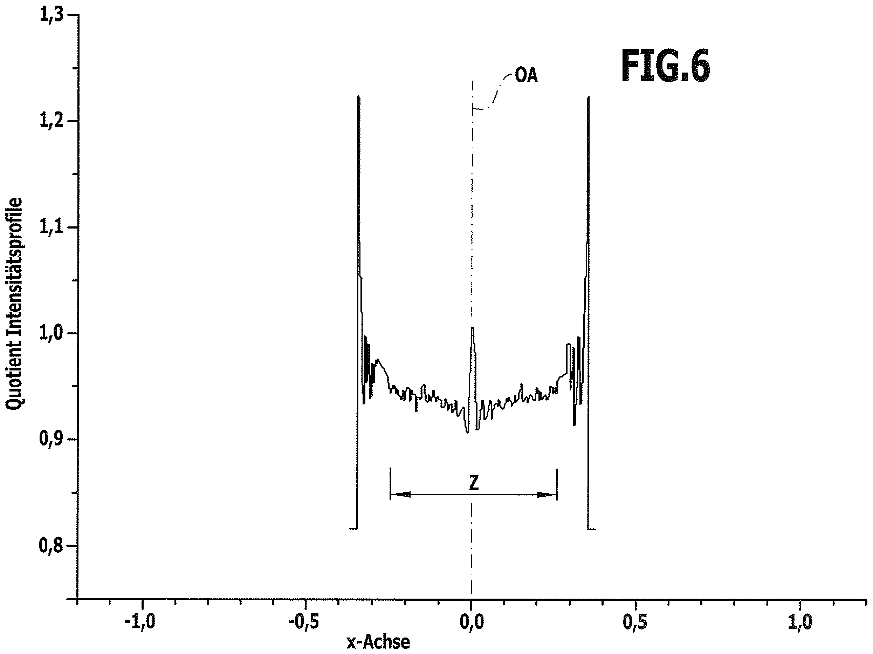

Ein Quotient der Intensitätsprofile $IP_1$ und $IP_2$, dargestellt in Fig. 6, zeigt dabei, dass die Abweichung der auf den Maximalwert normierten Intensitätswerte über den gesamten Strahlquerschnitt vorzugsweise weniger als 5% beträgt.

Die optischen Abbildungselemente 56 und 58 in Verbindung mit den Festkörperplättchen 62, 64 in Fig.

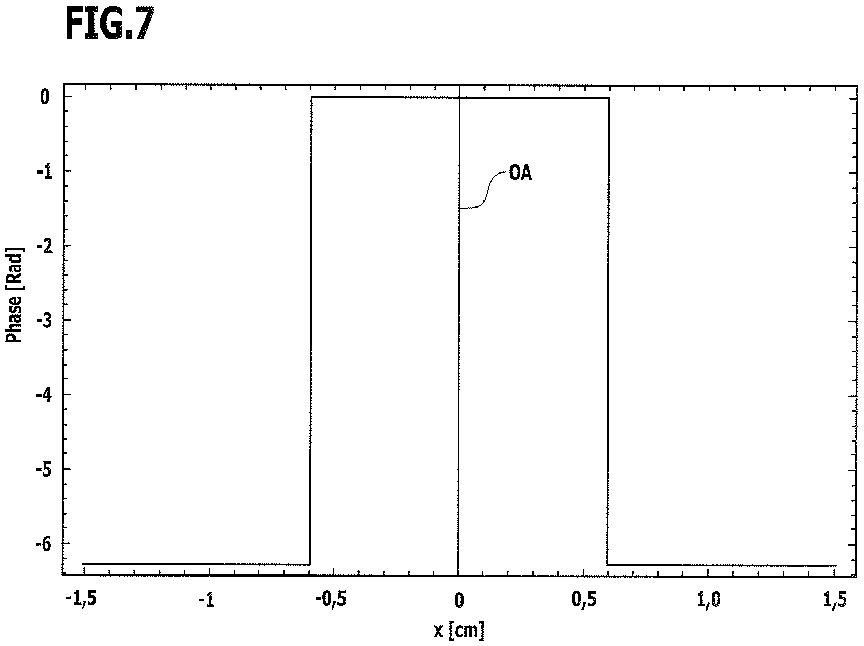

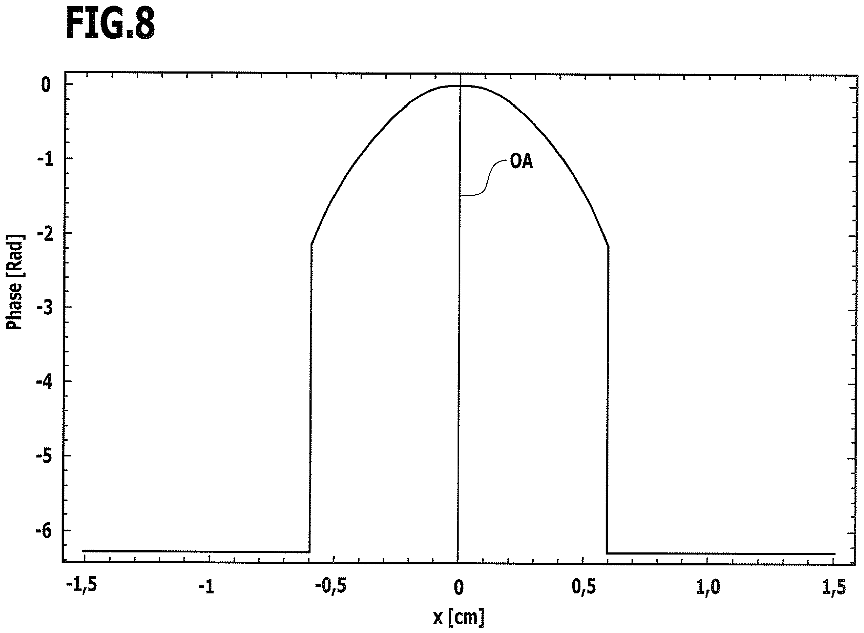

4 transformieren jedoch nicht nur das Intensitätsprofil von einer Modulendebene 52, 54 in die jeweils andere Modulendebene 54, 52, sondern auch Strahlungsfeldzustände darstellende Phasenprofile $PP_1$ und $PP_2$, wobei sich im Fall eines sich ideal optisch neutral verhaltenden Verstärkermoduls 50 eine Differenz der beiden Phasenprofile $PP_1$ und $PP_2$ wie in Fig. 7 dargestellt, ergibt, während die in Fig. 8 dargestellte relative Phase für den Fall eines sich nicht ideal optisch neutral verhaltenden Verstärkermoduls 50, welche der Differenz der Phasenprofile $PP_1$ und $PP_2$ entspricht, Variationen von weniger als 4 rad, noch besser weniger als 3 rad ergeben.

Bei einem zweiten Ausführungsbeispiel eines erfindungsgemäßen Verstärkermoduls 50', dargestellt in Fig. 9, ist das optisch verstärkende laseraktive Medium LM in die Abbildungselemente 56', 58' integriert, so dass die zusätzlichen Festkörperplättchen 62, 64 als Träger für das laseraktive Medium LM entfallen können. In diesem Fall entfallen die Auswirkungen der Festkörperplatten auf das optische System 80', so dass sich dieses leichter dimensionieren lässt.

Bei dem ersten und zweiten Ausführungsbeispiel des erfindungsgemäßen optischen Systems 80 und 80' ist dabei die Anordnung des laseraktiven Mediums LM unabhängig von dessen Position im Verstärkermodulstrahlungsfeld 60, es ist lediglich bei der Anordnung des laseraktiven Mediums LM zu berücksichtigen, dass der jeweilige Pumplichtfleck 72, 74 an den Verstärkermodulstrahlungsfeldquerschnitt 76, 78 angepasst wird, um das laseraktive Medium LM effizient, gegebenenfalls in Anpassung an die ausgewählten Resonatormoden zu pumpen und eine effiziente Verstärkung des Verstärkermodulstrahlungsfeldes 60 zu erhalten.

Im Übrigen wird beim zweiten Ausführungsbeispiel hinsichtlich der Beschreibung der übrigen Merkmale, insbesondere der Merkmale der Verstärkermodule vollinhaltlich auf die voranstehenden Ausführungen Bezug genommen.

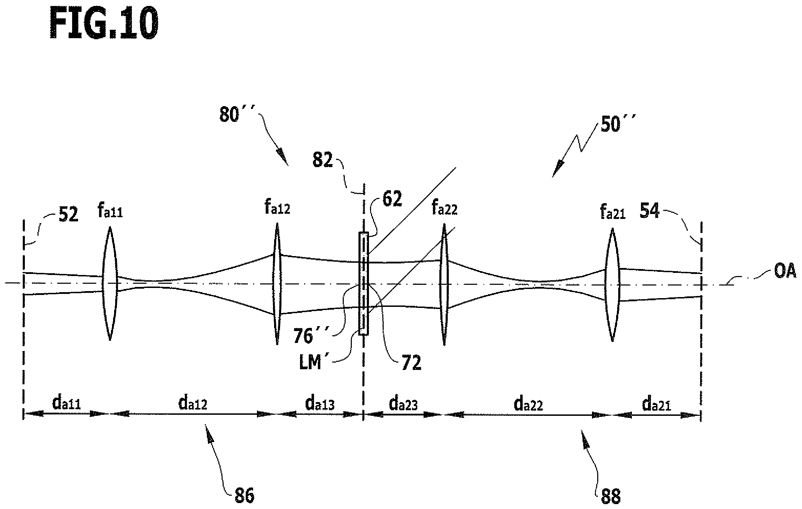

Bei einem dritten Ausführungsbeispiel eines Verstärkermoduls 50", dargestellt in Fig. 10 sind die Gesamteigenschaften des optischen Systems 80" dieselben wie bei dem ersten und zweiten Ausführungsbeispiel, das heißt, dass sich das optische System 80" quasineutral entsprechend der vorstehend gegebenen Definition verhält.

Im Gegensatz zu dem ersten und zweiten Ausführungsbeispiel ist bei dem dritten Ausführungsbeispiel eines erfindungsgemäßen Verstärkermoduls 50" das optische System 80" so ausgelegt, dass das Festkörperplättchen 62 in einer Abbildungsebene 82 des optischen Systems 80" angeordnet ist und dass das optische System 80" zwei beispielsweise auf Kepler-Teleskopen oder anderen, insbesondere Spiegel aufweisenden Teleskopen basierende und eine Vergrößerung VG gleich oder ungleich 1 aufweisenden Adaptierungszweige 86, 88 aufweist, welche das in der Abbildungsebene 82 vorliegende Verstärkermodulstrahlungsfeld auf die Modulendebene 52 bzw. die Modulendebene 54 abbilden.

Mit derartigen Adaptierungszweigen 86 und 88 besteht die Möglichkeit, den Verstärkermodulstrahlungsfeldquerschnitt 76" den gewünschten Verhältnissen anzupassen. Beispielsweise besteht die Möglichkeit, den Verstärkermodulstrahlungsfeldquerschnitt 76" an den Pumplichtfleck 72 auf dem Festkörperplättchen 62 durch Wahl der Adaptierungszweige 86, 88 anzupassen.

Die Adaptierungszweige 86, 88 sind dabei so ausgelegt, dass sich das optische System 80" als Ganzes hinsichtlich seines Transformationsverhaltens von Strahlungsfeldzuständen in der einen Modulendebene 52, 54 zur jeweils anderen Modulendebene 54, 52 in der vorstehend beschriebenen Weise quasineutral verhält, wobei insbesondere einer der Adaptierungszweige 86, 88 eine Vergrößerung VG gleich oder ungleich 1 aufweist und der andere der Adaptierungszweige 88, 86 die inverse Vergrößerung 1/VG aufweist.

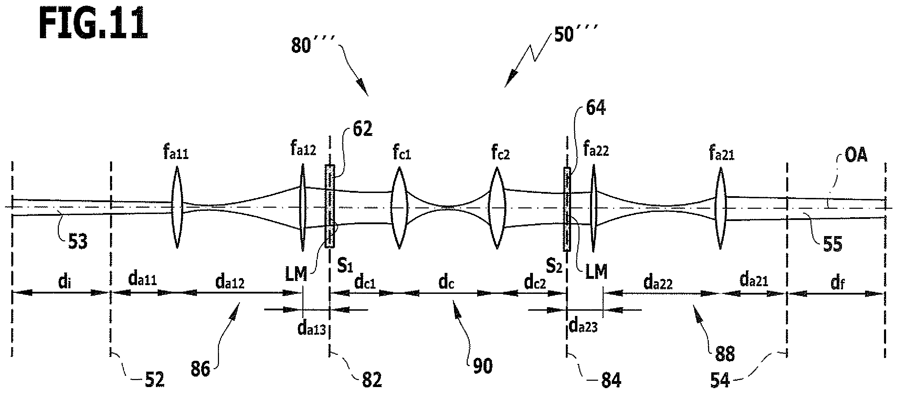

Bei einem vierten Ausführungsbeispiel eines erfindungsgemäßen Verstärkermoduls 50"', dargestellt in Fig. 11 ist das optische System 80"' als Ganzes in gleicher Weise wie vorstehend beschrieben dimensioniert, so dass dieses dasselbe Transformationsverhalten zwischen den Modulendebenen 52, 54 aufweist, wie die voranstehenden Verstärkermodule.

Beiderseites des Verstärkermoduls 50"' schließen sich die Strahlungsfeldstücke 53 und 55 an, die entweder Stücke von sich an die Modulebene 52, 54 anschließenden Resonatorstrahlungsfeldabschnitten 26 bzw. 36 oder von Verstärkermodulstrahlungsfeldern 60 benachbarter Verstärkermodule 50 oder von Strahlungsfeldern von zusätzlichen zwischengeschalteten Abbildungssystemen sind.

Im Gegensatz zu den voranstehenden Verstärkermodulen umfasst jedoch das optische System 80"' zwischen den Modulendebenen 52, 54 insgesamt zwei Abbildungsebenen 82 und 84, in welchen beispielsweise die Festkörperplättchen 62, 64 angeordnet sind.

Ferner umfasst das optische System 80"' ebenfalls die zwei auf Kepler-Teleskopen basierenden Adaptierungszweige 86, 88, wobei jeder der Adaptierungszweige 86, 88 die Strahlungsfeldzustände in den Modulendebenen 52 bzw. 54 mit einem bestimmten Abbildungsverhältnis auf die Abbildungsebene 82, 84 abbildet.

Zwischen den Abbildungsebenen 82, 84 ist ein Zwischenabbildungszweig 90 vorgesehen, welcher die Strahlungsfeldzustände in der Abbildungsebene 82 auf die Abbildungsebene 84 und umgekehrt transformiert und sich dabei vorzugsweise quasineutral im Rahmen der vorstehend gegebenen Definition hierfür verhält.

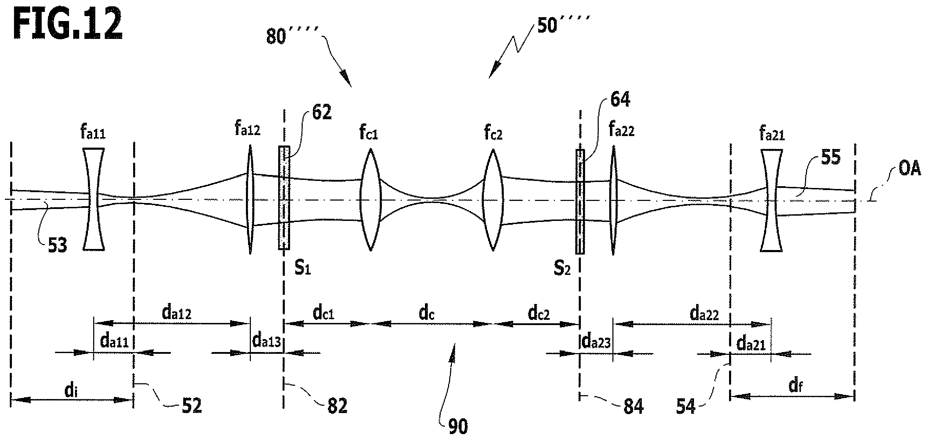

Bei einem fünften Ausführungsbeispiel eines optischen Systems 80"" eines Verstärkermoduls 50"" sind die Adaptierungszweige 86', 88' nicht auf Kepler-Teleskopen basierend aufgebaut, wie beim dritten und vierten Ausführungsbeispiel, sondern beispielsweise auf Galilei-Teleskopen mit kollimierenden optischen Elementen, identifizierbar durch die in Fig. 12 angegebenen Brennweiten, $f_{a12}$ bzw. $f_{a22}$, sowie mit defokussierenden

optischen Elementen, identifizierbar durch die in Fig. 12 angegebenen Brennweiten $f_{a11}$ bzw. $f_{a21}$, oder beispielsweise auch anderen Teleskopen basierend, so dass die Modulendebenen 52 bzw. 54 zwischen den optischen Elementen, identifizierbar durch die in Fig. 12 angegebenen Brennweiten $f_{a11}$ und $f_{a12}$ bzw. $f_{a22}$ und $f_{a21}$, der Galilei-Teleskope liegen. Die defokussierenden optischen Elemente, identifizierbar durch die in Fig. 12 angegebenen Brennweiten $f_{a11}$ und $f_{a21}$ sind somit noch in den Strahlungsfeldstücken 53 bzw. 55, die außerhalb des jeweiligen Verstärkermodulstrahlungsfeldes 60 liegen, das sich zwischen den Modulendebenen 52 bzw. 54 erstreckt, angeordnet.

Ein derartiger Aufbau ist möglich, wenn die außerhalb des Verstärkermodulstrahlungsfeldes 60 liegenden Strahlungsfeldstücke 53 bzw. 55, die Teile von Resonatorstrahlungsfeldabschnitten 26 bzw. 36 oder von Verstärkermodulstrahlungsfeldern 60 angrenzender Verstärkermodulen 50 oder von Strahlungsfeldern von zusätzlichen zwischengeschalteten Abbildungssystemen sein können, so dass in diesen Strahlungsfeldstücken 53, 55 das jeweilige defokussierende optische Element, identifizierbar durch die angegebenen Brennweiten $f_{a11}$ bzw. $f_{a21}$ störungsfrei angeordnet werden kann.

Als Bedingung gilt daher, dass die Ausdehnung $d_i$ der Strahlungsfeldstücke 53, 55 in Richtung der optischen Achse OA größer sein muss, als der Abstand $d_{a11}$ bzw. $d_{a21}$ der Modulendebenen 52 bzw. 54 von den defokussierenden optischen Elementen, identifizierbar durch die angegebenen Brennweiten $f_{a11}$ bzw. $fa_{21}$.

Ferner ist die Vergrößerung VG bei auf den Galilei-Teleskopen basierenden Adaptierungszweigen 86', 88' ungleich 1 und das eine Teleskop hat die Vergrößerung VG, während das andere Teleskop die Vergrößerung 1/VG aufweist.

Im Übrigen ist auch beim fünften Ausführungsbeispiel gemäß Fig. 12 der Zwischenabbildungszweige 90 mit dem des vierten Ausführungsbeispiels identisch.

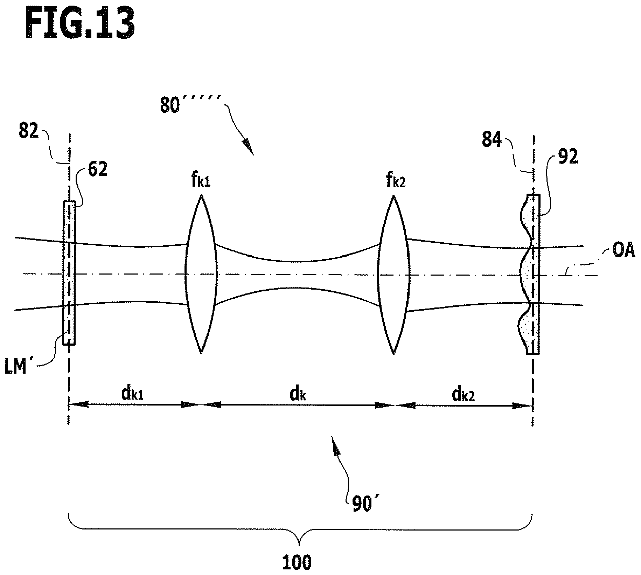

Bei einem sechsten Ausführungsbeispiel eines optischen Systems 80"", dargestellt in Fig. 13, ist in einer der Abbildungsebenen, beispielsweise der Abbildungsebene 82 das Festkörperplättchen 62 mit dem verstärkenden Medium V vorgesehen, während in der anderen Abbildungsebene, in diesem Fall der Abbildungsebene 84, ein adaptives optisches Element 92 vorgesehen ist. Das adaptive optische Element 92 dient dabei dazu, Phasenfehler, insbesondere von dem Festkörperplättchen 82, beispielsweise von dem in dem Festkörperplättchen 82 vorgesehenen optisch laseraktiven Medium LM erzeugte Phasenfehler, zu korrigieren, so dass der Zwischenabbildungszweig 90' mitsamt dem Festkörperplättchen 62 und dem adaptiven optischen Element 92 insgesamt ein optisches Teilsystem 100 bilden, welches sich zwischen den Adaptierungszweigen 86 und 88, die bei dem fünften Ausführungsbeispiel gemäß Fig. 13 nicht dargestellt sind, optisch quasineutral im Sinne der vorstehend gegebenen Definition verhält.

Bei einer weiteren Variante des optischen Systems 80"" ist mit einem weiteren Zwischenabbildungszweig 90' in einer weiteren Abbildungsebene 84' ein weiteres adaptives optisches Element 92 vorgesehen, so dass eine mehrfache und somit optimierte Phasenkorrektur möglich ist. Beispielsweise wäre es möglich, einmal eine sphärische und einmal eine asphärische Phasenkorrektur vorzusehen.

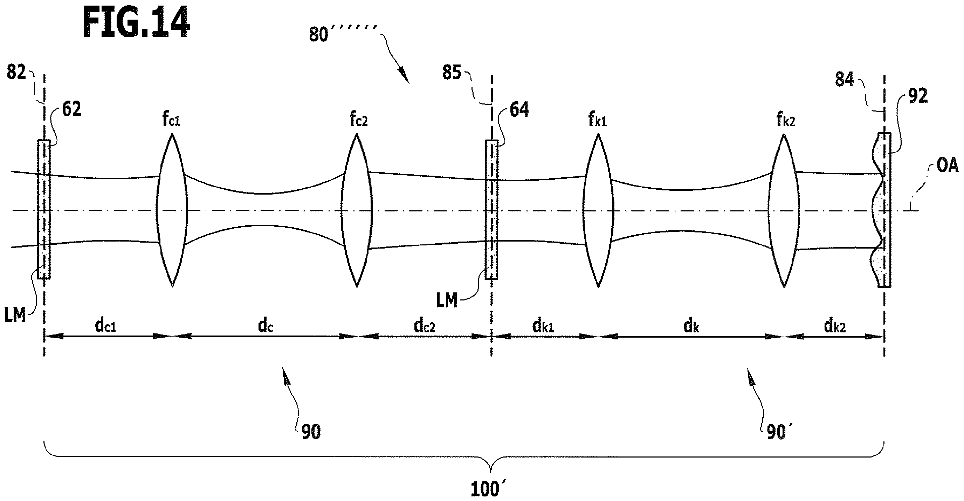

Ein derartiges optisches Teilsystem 10 lässt sich beliebig erweitern. So ist bei einem siebten Ausführungsbeispiel des erfindungsgemäßen optischen Systems 80""", dargestellt in Fig. 14, noch eine weitere Abbildungsebene 85 zwischen den Abbildungsebenen 82 und 84 vorgesehen, in welcher beispielsweise das Festkörperplättchen 64 angeordnet werden kann. In diesem Fall ist zwischen den Abbildungsebenen 82 und 85 ein Zwischenabbildungszweig 90 und zwischen den Abbildungsebenen 85 und 84 ein Zwischenabbildungszweig 90' vorgesehen, die zusammen mit den Festkörperplättchen 62 und 64 und dem adaptiven optischen Element 92 das optische Teilsystem 100' bilden, das seinerseits zwischen den Adaptierungszweigen 86 und 88, die in Fig. 14 ebenfalls nicht dargestellt sind, angeordnet ist und sich insgesamt im Sinne der vorstehend gegebenen Erfindung quasineutral verhält.

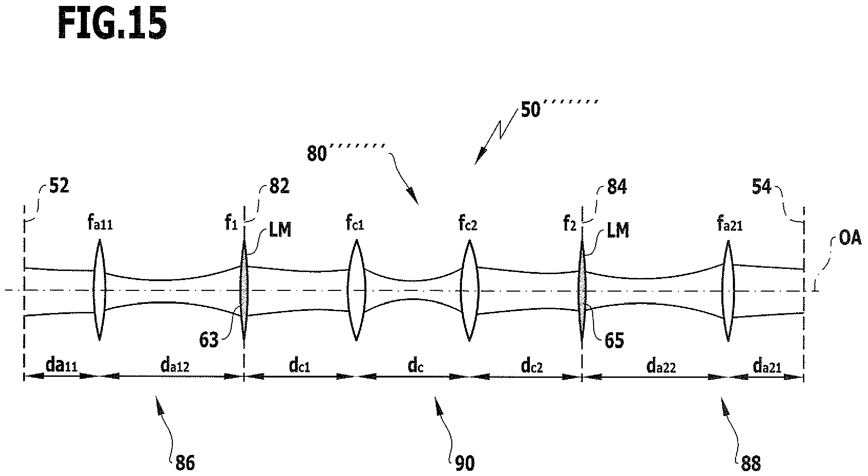

Bei einem achten Ausführungsbeispiel eines erfindungsgemäßen optischen Systems 80"""", dargestellt in Fig. 15, sind in Abwandlung zum vierten Ausführungsbeispiel, dargestellt in Fig. 11, in den Abbildungsebenen 82 und 84 als Träger für das optisch verstärkende Medium V anstelle der Festkörperplättchen 62, 64 als Abbildungselemente ausgebildete Festkörper 63 und 65 vorgesehen, welche aufgrund ihrer Abbildungseigenschaften sowohl in die Dimensionierung der Adaptierungszweige 86 und 88 als auch in die Dimensionierung des Zwischenabbildungszweigs 90 miteinbezogen sind, so dass insgesamt das optische System 80"""" gemäß dem siebten Ausführungsbeispiel sich quasineutral verhält.

Das achte Ausführungsbeispiel kann dabei dieselben Abwandlungen erfahren, wie das vierte Ausführungsbeispiel durch Einfügung eines adaptiven optischen Elements 92 in einer der Abbildungsebenen 82, 84, so dass hierzu auf die Ausführungen zu dem sechsten und siebten Ausführungsbeispiel gemäß Fig. 13 und 14 verwiesen wird, mit dem Unterschied, dass anstelle der Festkörperplättchen 62 und/oder 64 als Träger des optisch verstärkenden laseraktiven Mediums LM optische Elemente 63, 65 vorgesehen sind.

Bei einem neunten Ausführungsbeispiel eines erfindungsgemäßen Verstärkermoduls 50"""" ist das optische System 80"""" als gefaltetes System ausgebildet, so dass beispielsweise die optischen Abbildungselemente 56' und 58' keine transmissiv wirksamen Abbildungselemente, sondern reflektierend wirksame Abbildungselemente sind.

In gleicher Weise wie beim ersten Ausführungsbeispiel, dargestellt in Fig. 4, sind dabei Festkörperplättchen 62, 64 beispielsweise zwischen den optischen Abbildungselementen 56 und 58 angeordnet und wirksam.

Das optische System 80''''' ist dabei ebenfalls so dimensioniert, dass dieses insgesamt quasineutral im Sinne der im Zusammenhang mit den vorstehend beschriebenen Ausführungsbeispielen gegebenen Definition ist.

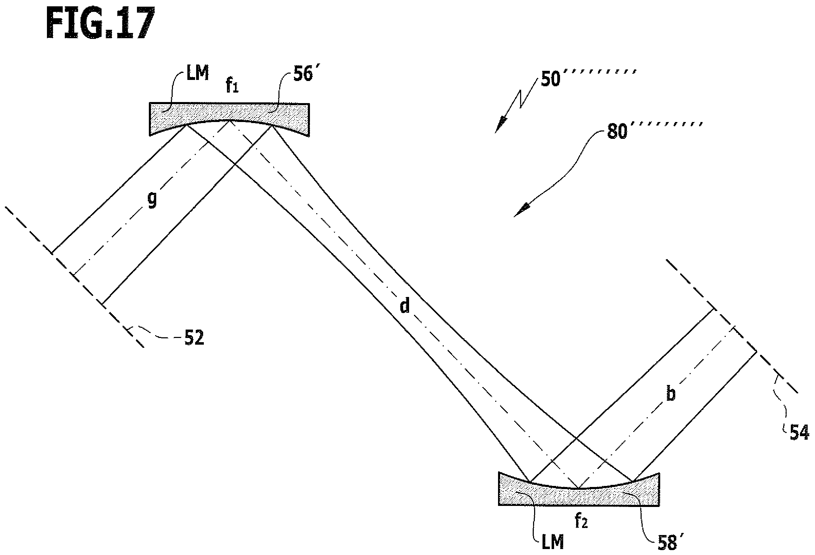

In Abwandlung zum neunten Ausführungsbeispiel ist bei einem zehnten Ausführungsbeispiel, dargestellt in Fig. 17, in Analogie zum zweiten Ausführungsbeispiel das optisch verstärkende laseraktive Medium LM in den Abbildungselementen 56' und 58' angeordnet, so dass die Dimensionierung des optischen Systems 80'''''' vereinfacht werden kann.

Als Resonator 12 wurde im Zusammenhang mit dem ersten Ausführungsbeispiel des erfindungsgemäßen Laserverstärkersystems ein konfokaler Resonator dargestellt. Der Resonator 12 kann jedoch grundsätzlich beliebig ausgebildet sein und die Verstärkereinheit 14 kann an unterschiedlichsten Stellen des Resonators angeordnet sein.

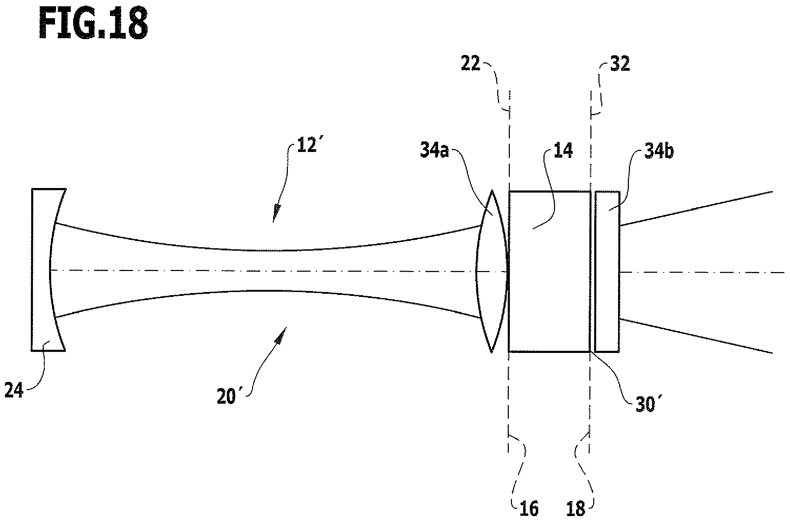

In Fig. 18 als zweites Ausführungsbeispiel eines erfindungsgemäßen Resonators, ist ebenfalls ein konfokaler stabiler Resonator 12' dargestellt, bei diesem liegen die Trennebenen 22 und 32 jedoch im Bereich des optischen Resonatorelements 34, und zwar zwischen dem Resonatorelement 34a und dem Resonatorelement 34b, wobei das Resonatorelement 34a ein abbildendes Resonatorelement und das Resonatorelement 34b ein reflektierendes Resonatorelement ist.

Bei diesem Ausführungsbeispiel des erfindungsgemäßen Resonators erstreckt sich der Resonatorabschnitt 20' von dem Resonatorelement 24 bis zur Trennebene 22 und umfasst das Resonatorelement 34a, während der Resonatorabschnitt 30' infinitesimal klein ist und sich lediglich zwischen der Trennebene 32 und dem sich an die Trennebene 32 unmittelbar anschließenden reflektierenden Resonatorelement 34b erstreckt.

Die Verstärkereinheit 14 kann dabei in gleicher Weise wie beim ersten Ausführungsbeispiel ausgebildet sein und ein Verstärkermodul 50 oder mehrere Verstärkermodule 50 umfassen.

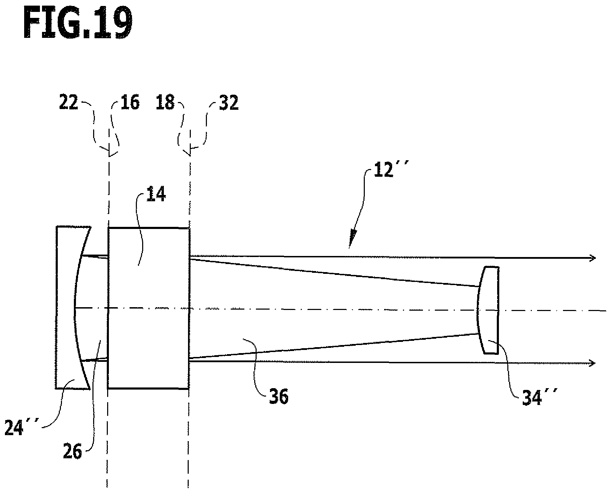

Bei einem exemplarisch dargestellten dritten Ausführungsbeispiel eines erfindungsgemäßen Resonators 12'', dargestellt in Fig. 19, arbeitet der Resonator als instabiler Resonator 12'', wobei bei der in Fig. 19 dargestellten Ausführungsform mit "positive branch" das optische Resonatorelement 24'' das kollimierende Resonatorelement ist, während das Resonatorelement 34'' das dekollimierende Resonatorelement ist.

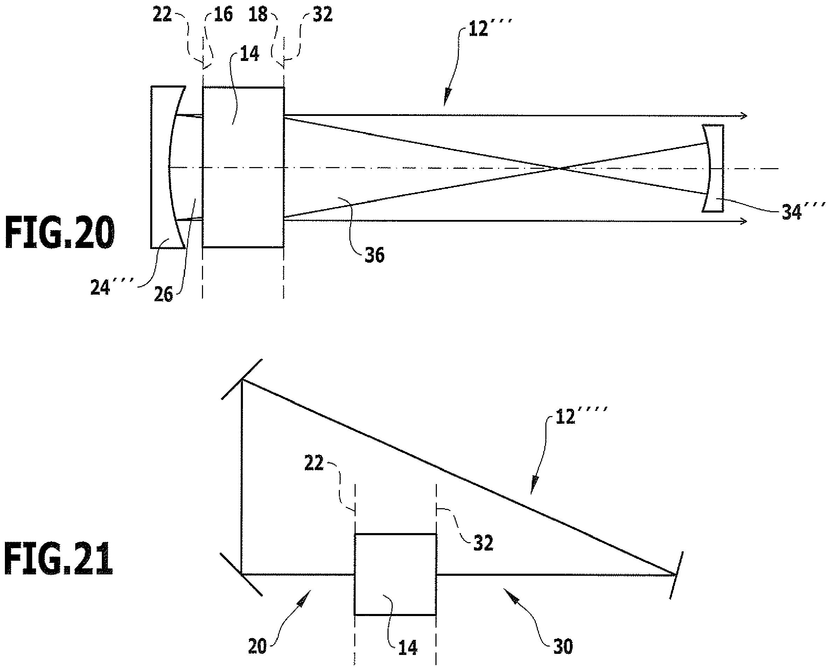

Bei einem in Fig. 20 dargestellten vierten Ausführungsbeispiel eines erfindungsgemäßen Resonators 12''' ist bei dem instabilen Resonator mit "negative branch" das Resonatorelement 34'' ebenfalls kollimierend ausgebildet.

Während bei einem stabilen Resonator die Lage der Trennebenen 22, 32 beliebig innerhalb des Resonators 12''' gewählt werden kann, ist beispielsweise bei dem instabilen Resonator 12''' die Lage der Trennebenen 22, 32 so zu wählen, dass diese möglichst nahe bei dem kollimierenden optischen Resonatorelement 24''' liegen, um sicherzustellen, dass die durch die Resonatorstrahlungsfeldabschnitte 26 und 36 in den Trennebenen 22 bzw. 32 erzeugten Strahlungsfeldzustände quasiidentisch ist, denn nur in diesem Fall kann die quasineutrale Verstärkereinheit 14, die zwischen den Trennebenen 22 und 32 liegt, aus einem oder mehreren erfindungsgemäßen Verstärkermodulen 50 aufgebaut sein.

Im Übrigen wird hinsichtlich der Beschreibung der übrigen Merkmale, insbesondere der Merkmale der Verstärkermodule vollinhaltlich auf die voranstehenden Ausführungen Bezug genommen.

Bei einem fünften Ausführungsbeispiel eines erfindungsgemäßen Resonators 12'''', dargestellt in Fig. 21, ist dieser als Ringresonator ausgebildet und ebenfalls im Bereich der Trennebenen 22, 32 aufgespalten, so dass zwischen den Trennebenen 22, 32 in gleicher Weise wie bei den voranstehenden Ausführungsbeispielen die Verstärkereinheit 14 angeordnet ist, hinsichtlich deren Merkmale vollinhaltlich auf die Ausführungen zu den voranstehenden Ausführungsbeispielen verwiesen wird.

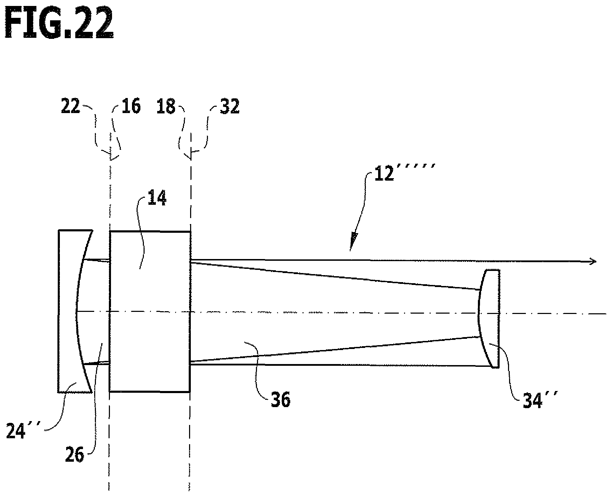

Bei einem sechsten Ausführungsbeispiel eines erfindungsgemäßen Laserverstärkersystems, dargestellt in Fig. 22, ist der Resonator 12''''' als Hybridresonator, der in der Zeichenebene instabil ist, ausgebildet, wobei ähnlich wie beim instabilen Resonator die Trennebenen 22, 32 möglichst nahe bei dem kollimierenden optischen Resonatorelement 24'' liegen.

## Patentansprüche

1. Laserverstärkersystem umfassend
einen Resonator (12) mit optischen Resonatorelementen (24, 34), die einen Verlauf eines sich längs einer optischen Achse (OA) ausbreitenden Resonatorstrahlungsfeldes (26, 36) festlegen und mindestens ein laseraktives Medium (LM), wobei der Resonator (12) als aufgespaltener Resonator (12) ausgebildet ist, der einen sich ausgehend von einer ersten virtuellen Trennebene (22) erstreckenden ersten Resonatorabschnitt (20) und einen sich ausgehend von einer zweiten virtuellen Trennebene (32) erstreckenden zweiten Resonatorabschnitt (30) aufweist, wobei die Resonatorabschnitte (20, 30) optisch so dimensioniert sind, dass das Resonatorstrahlungsfeld (26, 36) in jeder der virtuellen Trennebenen (22, 32) denselben Resonatormoden entsprechende Strahlungsfeldzustände aufweist, wobei zwischen der ersten und der zweiten virtuellen Trennebene (22, 32) eine optisch vom Resonator (12) unabhängige Verstärkungseinheit (14) angeordnet ist, welche das mindestens eine laseraktive Medium (LM) umfasst und die denselben Resonatormoden entsprechenden Strahlungsfeldzustände resonatormodenneutral koppelt, so dass die Verstärkungseinheit optisch vom Resonator unabhängig ist und somit die Dimensionierung des Resonators und die Festlegung der Resonatormoden unabhängig von den optischen Eigenschaften der Verstärkungseinheit ist, wobei die Verstärkungseinheit (14) mindestens ein das mindestens eine laseraktive Medium (LM) aufweisendes Verstärkermodul (50) umfasst, wobei sich das mindestens eine Verstärkermodul (50) optisch resonatormodenneutral verhält, wobei dabei jedes Verstärkermodul (50) sich zwischen einer ersten virtuellen Modulendebene (52) und einer zweiten virtuellen Modulendebene (54) erstreckt und optisch so dimensioniert ist, dass dieses im Betrieb des Laserverstärkersystems bei mindestens einer mittleren Leistung innerhalb eines vorgesehenen Leistungsbereichs ein Strahlungsfeldzustände repräsentierendes Intensitätsprofil eines Verstärkermodulstrahlungsfeldes (60) in einer der Modulendebenen (52) in die andere der Modulendebenen (54) in mindestens einem Zentralbereich (Z) intensitätsprofilformerhaltend transformiert, wobei eine erste der virtuellen Modulendebenen (52) mit der ersten virtuellen Trennebene (22) und eine zweite der virtuellen Modulendebenen (54) mit der zweiten virtuellen Trennebene (32) gekoppelt ist, wobei dabei mindestens in dem Zentralbereich (Z) die einzelnen Strahlungsfeldzustandswerte repräsentierenden Intensitätswerte des auf seinen Maximalwert normierten Intensitätsprofils (IP) in den jeweils durch Abbildung einander zugeordneten Orten in den Modulendebenen (52,54) um maximal 20% des Maximalwertes voneinander abweichen, wobei dabei unter der Zuordnung der einzelnen Orte durch Abbildung zu verstehen ist, dass im Falle einer exakten Abbildung die einzelnen Orte einander eindeutig zugeordnet sind, im Fall einer nicht scharfen Abbildung die Zuordnung dadurch erfolgt, dass bei dem unscharfen Abbild eines Ortes einer Modulebene in der anderen Modulebene der Schwerpunkt des unscharfen Bildes dieses Ortes als zugeordneter Ort zu betrachten ist, wobei das mindestens eine Verstärkermodul (50) ein Strahlungsfeldzustände repräsentierendes Phasenprofil (PP) von einer Modulendebene (52, 54) zur anderen Modulendebene (54, 52) mindestens in einem Zentralbereich (Z) phasenprofilformerhaltend transformiert und wobei dabei die Differenz der Phasenwerte der Phasenprofile (PP) in den jeweils durch Abbildung einander zugeordneten Orten in den Modulendebenen (52, 54) an jeder Stelle kleiner als 4 rad ist.

2. Laserverstärkersystem nach Anspruch 1, **dadurch gekennzeichnet, dass** das mindestens eine Verstärkermodul (50) optisch neutral mit den virtuellen Trennebenen (16, 18) gekoppelt ist.

3. Laserverstärkersystem nach Anspruch 1 oder 2, **dadurch gekennzeichnet, dass** der Zentralbereich (Z) dem kleinsten Querschnittsbereich des Verstärkermodulstrahlungsfeldes (60) entspricht, der 80% der Gesamtleistung des Verstärkermodulstrahlungsfeldes (60) umfasst.

4. Laserverstärkersystem nach einem der voranstehenden Ansprüche, **dadurch gekennzeichnet, dass** die Verstärkungseinheit (14) ein Verstärkermodul (50) umfasst, bei dem eine erste der Modulendebenen (52) mit der ersten Trennebene (22) und eine zweite der Modulendebenen (54) mit der zweiten Trennebene (32) zusammenfallen.

5. Laserverstärkersystem nach einem der Ansprüche 1 bis 3, **dadurch gekennzeichnet, dass** die Verstärkungseinheit (14) mehrere Verstärkermodule (50) umfasst und dass insbesondere zwischen den Trennebenen (22, 32) mehrere eine Gesamtheit bildende Verstärkermodule (50) aufeinanderfolgend angeordnet sind und dass bei den aufeinanderfolgenden Verstärkermodulen (50) jeweils eine erste Modulendebene (52) mit einer zweiten Modulendebene (54) optisch neutral gekoppelt ist und dass bei der Gesamtheit der Verstärkermodule (50) die erste Modulendebene (52) eines ersten Verstärkermoduls (50a) mit einer der Trennebenen (22) und die zweite Modulendebene (54n) des letzten Verstärkermoduls (50n) mit der anderen Trennebene (32) optisch gekoppelt ist.

6. Laserverstärkersystem nach Anspruch 5, **dadurch gekennzeichnet, dass** bei den aufeinanderfolgenden Verstärkermodulen (50) jeweils eine erste Modulendebene (52) mit einer zweiten Modulendebene (54) zusammenfällt und dass bei der Gesamtheit der Verstärkermodule (50) die erste Modulendebene (52) eines ersten Verstärkermoduls (50a) mit einer der Trennebenen (22) und die Modulendebene (54n) des letzten Verstärkermoduls (50n) mit der anderen der Trennebenen (32) optisch neutral gekoppelt sind.

7. Laserverstärkersystem nach einem der voranstehenden Ansprüche, **dadurch gekennzeichnet, dass** eine erste Modulendebene (52) des mindestens einen Verstärkermoduls (50) mit der ersten Trennebene (22) und eine zweite Modulendebene (54) des mindestens einen Verstärkermoduls (50) mit der zweiten Trennebene (32) optisch neutral gekoppelt sind und dass das mindestens eine Verstärkermodul (50) im Betrieb des Laserverstärkersystems bei mindestens einer mittleren Leistung innerhalb eines vorgesehenen Leistungsbereichs zwischen den Modulendebenen (52, 54) ein Verstärkermodulstrahlungsfeld (60) ausbildet, welches mindestens in einem Zentralbereich (Z) die Strahlungsfeldzustände in den Modulendebenen (52, 54) optisch quasineutral miteinander koppelt, wobei das Verstärkermodul (50) ein optisches System (80) darstellt, dessen ABCD-Matrix die Werte

$$0,97 \quad < |A| < 1,03$$

$$-0,2 \text{ m} \quad < \text{ B } < 0,2 \text{ m}$$

$$-0,2 \,^{1}/_{m} < \text{ C } < 0,2 \,^{1}/_{m}$$

$$0,97 \quad < |D| < 1,03$$

aufweist.

8. Laserverstärkersystem nach Anspruch 7, **dadurch gekennzeichnet, dass** zwischen den Trennebenen (22, 32) mehrere, eine Gesamtheit bildende Verstärkermodule (50) aufeinanderfolgend angeordnet sind und dass bei den aufeinanderfolgenden Verstärkermodulen (50) jeweils eine erste Modulendebene (52) mit einer zweiten Modulendebene (54) optisch neutral gekoppelt ist und dass bei der Gesamtheit der Verstärkermodule (50) die erste Modulendebene (52) eines ersten Verstärkermoduls (50a) mit einer der Trennebenen (22) und eine zweite Modulendebene (54) des letzten Verstärkermoduls (50n) mit der anderen der Trennebenen (32) optisch neutral gekoppelt sind.

9. Laserverstärkersystem nach einem der voranstehenden Ansprüche, **dadurch gekennzeichnet, dass** das laseraktive Medium (LM) in mindestens einem Festkörper (62, 64, 56', 58') angeordnet ist und dass insbesondere der mindestens eine Festkörper (62, 64, 56', 58') sich quer zur optischen Achse (OA) ausdehnt.

10. Laserverstärkersystem nach Anspruch 9, **dadurch gekennzeichnet, dass** der mindestens eine Festkörper (62, 64, 56', 58') quer zur optischen Achse (OA) in jeder Richtung eine Ausdehnung aufweist, die größer als die Ausdehnung in Richtung der optischen Achse (OA) ist.

11. Laserverstärkersystem nach Anspruch 9 oder 10, **dadurch gekennzeichnet, dass** der mindestens eine Festkörper (62, 64, 56', 58') in dem Verstärkermodul (50) zwischen den Modulendebenen (52, 54) angeordnet ist.

12. Laserverstärkersystem nach einem der Ansprüche 9 bis 11, **dadurch gekennzeichnet, dass** der mindestens eine Festkörper (62, 64, 56', 58') in einem Bereich des Verstärkermodulstrahlungsfeldes (60) angeordnet ist, in welchem dessen Verstärkermodulstrahlungsfeldquerschnitt (76, 78) kleiner als ein Pumplichtfleck (72, 74) ist.

13. Laserverstärkersystem nach einem der voranstehenden Ansprüche, **dadurch gekennzeichnet, dass** in einer Abbildungsebene (84) des Verstärkermoduls (50) ein eine optische Weglänge variierendes Phasenkorrekturelement (92) angeordnet ist.

14. Verfahren zum Aufbau eines Laserverstärkersystems umfassend einen Resonator (12) mit optischen Resonatorelementen (24, 34), die einen Verlauf eines sich längs einer optischen Achse (OA) ausbreitenden Resonatorstrahlungsfeldes (26, 36) festlegen und mindestens ein laseraktives Medium (LM), wobei der Resonator (12) als aufgespaltener Resonator (12) ausgebildet wird, der einen sich ausgehend von einer ersten virtuellen Trennebene (22) erstreckenden ersten Resonatorabschnitt (20) und einen sich ausgehend von einer zweiten virtuellen Trennebene (32) erstreckenden zweiten Resonatorabschnitt (30) aufweist, wobei die Resonatorabschnitte (20, 30) optisch so dimensioniert werden, dass das Resonatorstrahlungsfeld (26, 36) in jeder der virtuellen Trennebenen (22, 32) denselben Resonatormoden entsprechende Strahlungsfeldzustände aufweist, wobei zwischen der ersten und der zweiten virtuellen Trennebene (22, 32) eine optisch vom Resonator (12) unabhängige Verstärkungseinheit (14) angeordnet wird, welche das mindestens eine laseraktive Medium (LM) umfasst und die denselben Resonatormoden entsprechenden Strahlungsfeldzustände resonatormodenneutral koppelt, so dass die Verstärkungseinheit optisch vom Resonator unabhängig ist und somit die Dimensionierung des Resonators und die Festlegung der Resonatormoden unabhängig von den optischen Eigenschaften der Verstärkungseinheit ist, wobei die Verstärkungseinheit (14) mindestens ein das mindestens eine laseraktive Medium (LM) aufweisendes Verstärkermodul (50) umfasst, wobei das mindestens eine Verstärkermodul (50) sich optisch resonatormodenneutral verhält, wobei dabei jedes Verstärkermodul (50) sich zwischen einer ersten virtuellen Modulendebene (52) und einer zweiten virtuellen Modulendebene (54) erstreckt und optisch so dimensioniert wird, dass dieses im Betrieb des Laserverstärkersystems bei mindestens einer mittleren Leistung innerhalb eines vorgesehenen Leistungsbereichs ein Strahlungsfeldzustände repräsentierendes Intensitätsprofil eines Verstärkermodulstrahlungsfeldes (60) in einer der Modulendebenen (52) in die andere der Modulendebenen (54) in mindestens einem Zentralbereich (Z) intensitätsprofilformerhaltend transformiert und wobei eine erste der virtuellen Modulendebenen (52) mit der ersten virtuellen Trennebene (22) und eine zweite der virtuellen Modulendebenen (54) mit der zweiten virtuellen Trennebene (32) gekoppelt werden, wobei mindestens in dem Zentralbereich (Z) die einzelnen Strahlungsfeldzustandswerte repräsentierenden Intensitätswerte des auf seinen Maximalwert normierten Intensitätsprofils (IP) in den jeweils durch Abbildung einander zugeordneten Orten in den Modulendebenen (52,54) um maximal 20% des Maximalwertes voneinander abweichen, wobei dabei unter der Zuordnung der einzelnen Orte durch Abbildung zu verstehen ist, dass im Falle einer exakten Abbildung die einzelnen Orte einander eindeutig zugeordnet sind, im Fall einer nicht scharfen Abbildung die Zuordnung dadurch erfolgt, dass bei dem unscharfen Abbild eines Ortes einer Modulebene in der anderen Modulebene der Schwerpunkt des unscharfen Bildes dieses Ortes als zugeordneter Ort zu betrachten ist, wobei das mindestens eine Verstärkermodul (50) ein Strahlungsfeldzustände repräsentierendes Phasenprofil (PP) von einer Modulendebene (52, 54) zur anderen Modulendebene (54, 52) mindestens in einem Zentralbereich (Z) phasenprofilformerhaltend transformiert und wobei dabei die Differenz der Phasenwerte der Phasenprofile (PP) in den jeweils durch Abbildung einander zugeordneten Orten in den Modulendebenen (52, 54) an jeder Stelle kleiner als 4 rad ist.

15. Verfahren zum Aufbau eines Laserverstärkersystems nach Anspruch 14, **dadurch gekennzeichnet, dass** eine erste Modulendebene (52) des mindestens einen Verstärkermoduls (50) mit der ersten Trennebene (22) und eine zweite Modulendebene (54) des mindestens einen Verstärkermoduls (50) mit der zweiten Trennebene (32) optisch neutral gekoppelt werden und dass das mindestens eine Verstärkermodul (50) im Betrieb des Laserverstärkersystems bei mindestens einer mittleren Leistung innerhalb eines vorgesehenen Leistungsbereichs zwischen den Modulendebenen (52, 54) ein Verstärkermodulstrahlungsfeld (60) ausbildet, welches mindestens in einem Zentralbereich (Z) die Strahlungsfeldzustände in den Modulendebenen (52, 54) optisch quasi-neutral miteinander koppelt, wobei das Verstärkermodul (50) ein optisches System (80) darstellt, dessen ABCD-Matrix die Werte

$$0{,}97 \quad < |A| < 1{,}03$$

$$-0{,}2\,\mathrm{m} \;<\; B \;< 0{,}2\,\mathrm{m}$$

$$-0{,}2\,{}^{1}\!/_{\mathrm{m}} < \; C \; < 0{,}2\,{}^{1}\!/_{\mathrm{m}}$$

$$0{,}97 \quad < |D| < 1{,}03$$

aufweist.

**Claims**

1. Laser amplifier system, comprising a resonator (12) with optical resonator elements (24, 34) determining a course of a resonator radiation field (26, 36) propagating along an optical axis (OA) and at least one laser-active medium (LM), wherein the resonator (12) is designed as a split resonator (12) having a first resonator section (20) extending from a first virtual plane of separation (22) and a second resonator section (30) extending from a second virtual plane of separation (32), wherein the resonator sections (20, 30) are dimensioned optically such that the resonator radiation field (26, 36) has radiation field states corresponding to the same resonator modes in each of the virtual planes of separation (22, 32), wherein an amplifying unit (14) optically independent of the resonator (12) is arranged between the first and the second virtual planes of separation (22, 32), said amplifying unit comprising the at least one laser-active medium (LM) and coupling the radiation field states corresponding to the same resonator modes in a neutral manner with respect to the resonator modes such that the amplifying unit is optically independent of the resonator and, thus, the dimensioning of the resonator and the determination of the resonator modes are independent of the optical characteristics of the amplifying unit, wherein the amplifying unit (14) comprises at least one amplifier module (50) having the at least one laser-active medium (LM), wherein the at least one amplifier module (50) behaves in an optically neutral manner with respect to the resonator modes, wherein, in this respect, each amplifier module (50) extends between a first virtual module end plane (52) and a second virtual module end plane (54) and is dimensioned optically such that during operation of the laser amplifier system with at least an average power within a predetermined power range it transforms an intensity profile representing radiation field states of an amplifier module radiation field (60) in one of the module end planes (52) to the other one of the module end planes (54) in at least one central area (Z) in a manner retaining the intensity profile shape and wherein a first one of the virtual module end planes (52) is coupled to the first virtual plane of separation (22) and a second one of the virtual module end planes (54) is coupled to the second virtual plane of separation (32), wherein, in this respect, at least in the central area (Z) the intensity values of the intensity profile (IP) normalized to its maximum value, said intensity values representing individual radiation field state values, deviate from one another by a maximum of 20 % of the maximum value in the locations in the module end planes (52, 54) respectively associated with one another as a result of imaging, wherein, in this respect, the association of the individual locations as a result of imaging is to be understood in that in the case of an exact imaging the individual locations are clearly associated with one another, in the case of an out-of-focus imaging the association is brought about in that in the case of the out-of-focus image of a location of one module plane in the other module plane the geometric centre of the out-of-focus image of this location is to be considered as associated location, wherein the at least one amplifier module (50) transforms a phase profile (PP) representing radiation field states from one module end plane (52, 54) to the other module end plane (54, 52) at least in a central area (Z) in a manner retaining the phase profile shape and wherein, in this respect, the difference in the phase values of the phase profiles (PP) in the locations in the module end planes (52, 54) respectively associated with one another as a result of imaging is less than 4 rad at every point.

2. Laser amplifier system as defined in claim 1, **characterized in that** the at least one amplifier module (50) is coupled to the virtual planes of separation (16, 18) in an optically neutral manner.

3. Laser amplifier system as defined in claim 1 or 2, **characterized in that** the central area (Z) corresponds to the smallest cross sectional area of the amplifier module radiation field (60) comprising 80 % of the overall power of the amplifier module radiation field (60).

4. Laser amplifier system as defined in any one of the preceding claims, **characterized in that** the amplifying unit (14) comprises one amplifier module (50), a first one of the module end planes (52) coinciding with the first plane of separation (22) and a second one of the module end planes (54) coinciding with the second plane of separation (32) with said module.

5. Laser amplifier system as defined in any one of claims 1 to 3, **characterized in that** the amplifying unit (14) comprises several amplifier modules (50) and that several amplifier modules (50) forming an entirety are arranged, in particular, one after the other between the planes of separation (22, 32) and that in the case of the consecutive amplifier modules (50) a first respective module end plane (52) is coupled to a second respective module end plane (54) in an optically neutral manner and that in the entirety of the amplifier modules (50) the first module end plane (52) of a first amplifier module (50a) is coupled optically to one of the planes of separation (22) and the second module end plane (54n) of the last amplifier module (50n) is coupled optically to the other plane of separation (32).

6. Laser amplifier system as defined in claim 5, **characterized in that** in the case of the consecutive amplifier modules (50) a first respective module end plane (52) coincides with a second respective module end plane (54) and that in the entirety of the amplifier modules (50) the first module end plane (52) of a first amplifier module (50a) is coupled in an optically neutral manner to one of the planes of separation (22) and the module end plane (54n) of the last amplifier module (50n) is coupled in an optically neutral manner to the other one of the planes of separation (32).

7. Laser amplifier system as defined in any one of the preceding claims, **characterized in that** a first module end plane (52) of the at least one amplifier module (50) is coupled in an optically neutral manner to the first plane of separation (22) and a second module end plane (54) of the at least one amplifier module (50) is coupled in an optically neutral manner to the second plane of separation (32) and that the at least one amplifier module (50) forms an amplifier module radiation field (60) between the module end planes (52, 54) during operation of the laser amplifier system with at least an average power within a predetermined power range, said radiation field coupling the radiation field states in the module end planes (52, 54) to one another in an optically quasi-neutral manner at least in a central area (Z), wherein the amplifier module (50) represents an optical system (80), the ABCD matrix thereof having the values

$$0.97 \quad < |A| < 1.03$$

$$-0.2\,\text{m} \quad < \ B \ < 0.2\,\text{m}$$

$$-0.2\,{}^{1}\!/_{\text{m}} < \ C \ < 0.2\,{}^{1}\!/_{\text{m}}$$

$$0.97 \quad < |D| < 1.03.$$

8. Laser amplifier system as defined in claim 7, **characterized in that** several amplifier modules (50) forming an entirety are arranged one after the other between the planes of separation (22, 32) and that in the case of the consecutive amplifier modules (50) a first respective module end plane (52) is coupled in an optically neutral manner to a second respective module end plane (54) and that in the entirety of the amplifier modules (50) the first module end plane (52) of a first amplifier module (50a) is coupled in an optically neutral manner to one of the planes of separation (22) and a second module end plane (54) of the last amplifier module (50n) is coupled in an optically neutral manner to the other one of the planes of separation (32).

9. Laser amplifier system as defined in any one of the preceding claims, **characterized in that** the laser-active medium (LM) is arranged in at least one solid-state body (62, 64, 56', 58') and that the at least one solid-state body (62, 64, 56', 58') extends, in particular, transversely to the optical axis (OA).

10. Laser amplifier system as defined in claim 9, **characterized in that** the at least one solid-state body (62, 64, 56', 58') has an extension transversely to the optical axis (OA) in every direction greater than the extension in the direction of the optical axis (OA).

11. Laser amplifier system as defined in claim 9 or 10, **characterized in that** the at least one solid-state body (62, 64, 56', 58') is arranged in the amplifier module (50) between the module end planes (52, 54).

12. Laser amplifier system as defined in any one of claims 9 to 11, **characterized in that** the at least one solid-state body (62, 64, 56', 58') is arranged in an area of the amplifier module radiation field (60) where its amplifier module radiation field cross section (76, 78) is smaller than a pumping light spot (72, 74).

13. Laser amplifier system as defined in any one of the preceding claims, **characterized in that** a phase correction element (92) varying an optical path length is arranged in one plane of imaging (84) of the amplifier module (50).

14. Method for setting up a laser amplifier system comprising a resonator (12) with optical resonator elements (24, 34) determining a course of a resonator radiation field (26, 36) propagating along an optical axis (OA) and at least one laser-active medium (LM), wherein the resonator (12) is designed as a split resonator (12) having a first resonator section (20) extending from a first virtual plane of separation (22) and a second resonator section (30) extending from a second virtual plane of separation (32), wherein the resonator sections (20, 30) are dimensioned optically such that the resonator radiation field (26, 36) has radiation field states corresponding to the same resonator modes in each of the virtual planes of separation (22, 32), wherein an amplifying unit (14) optically independent of the resonator (12) is arranged between the first and the second virtual planes of separation (22, 32), said amplifying unit comprising the at least one laser-active medium (LM) and coupling the radiation field states corresponding to the same resonator modes in a neutral manner with respect to the resonator modes such that the amplifying unit is optically independent of the resonator and, thus, the dimensioning of the resonator and the determination of the resonator modes are independent of the optical characteristics of the amplifying unit, wherein the amplifying unit (14) comprises at least one amplifier module (50) having the at least one laser-active medium (LM), wherein the at least one amplifier module (50) behaves in an optically neutral manner with respect to the resonator modes, wherein, in this respect, each amplifier module (50) extends between a first virtual module end plane (52) and a second virtual module end plane (54) and is dimensioned optically such that during operation of the laser amplifier system with at least an average power within a predetermined power range it transforms an intensity profile representing radiation field states of an amplifier module radiation field (60) in one of the module end planes (52) to the other one of the module end planes (54) in at least one central area (Z) in a manner retaining the intensity profile shape and wherein a first one of the virtual module end planes (52) is coupled to the first virtual plane of separation (22) and a second one of the virtual module end planes (54) is coupled to the second virtual plane of separation (32), wherein at least in the central area (Z) the intensity values of the intensity profile (IP) normalized to its maximum value, said intensity values representing individual radiation field state values, deviate from one another by a maximum of 20 % of the maximum value in the locations in the module end planes (52, 54) respectively associated with one another as a result of imaging, wherein, in this respect, the association of the individual locations as a result of imaging is to be understood in that in the case of an exact imaging the individual locations are clearly associated with one another, in the case of an out-of-focus imaging the association is brought about in that in the case of the out-of-focus image of a location of one module plane in the other module plane the geometric centre of the out-of-focus image of this location is to be considered as associated location, wherein the at least one amplifier module (50) transforms a phase profile (PP) representing radiation field states from one module end plane (52, 54) to the other module end plane (54, 52) at least in a central area (Z) in a manner retaining the phase profile shape and wherein, in this respect, the difference in the phase values of the phase profiles (PP) in the locations in the module end planes (52, 54) respectively associated with one another as a result of imaging is less than 4 rad at every point.

15. Method for setting up a laser amplifier system as defined in claim 14, **characterized in that** a first module end plane (52) of the at least one amplifier module (50) is coupled in an optically neutral manner to the first plane of separation (22) and a second module end plane (54) of the at least one amplifier module (50) is coupled in an optically neutral manner to the second plane of separation (32) and that the at least one amplifier module (50) forms an amplifier module radiation field (60) between the module end planes (52, 54) during operation of the laser amplifier system with at least an average power within a predetermined power range, said radiation field coupling the radiation field states in the module end planes (52, 54) to one another in an optically quasi-neutral manner at least in a central area (Z), wherein the amplifier module (50) represents an optical system (80), the ABCD matrix thereof having the values

$$0.97 \quad < |A| < 1.03$$

$$-0.2\,m \quad < \ B \ < 0.2\,m$$

$$-0.2\,^1/_m < \ C \ < 0.2\,^1/_m$$

$$0.97 \quad < |D| < 1.03.$$

## Revendications

1. Système d'amplificateur laser comprenant un résonateur (12) doté d'éléments optiques de résonateur (24, 34), qui définissent le parcours d'un champ de rayonnement de résonateur (26, 36) se propageant le long d'un axe optique (OA), et au moins un milieu actif de laser (LM),

système d'amplificateurdans lequel le résonateur (12) est réalisé sous la forme d'un résonateur à fente (12), qui présente une première partie de résonateur (20) s'étendant à partir d'un premier plan virtuel de séparation (22) et une deuxième partie de résonateur (30) s'étendant à partir d'un deuxième plan virtuel de séparation (32),

dans lequel les parties de résonateur (20, 30) sont dimensionnées optiquement de telle sorte que le champ de rayonnement de résonateur (26, 36) présente dans chacun des plans virtuels de séparation (22, 32) des états de champ de rayonnement correspondant aux mêmes modes de résonateur,

dans lequel une unité d'amplification (14) indépendante optiquement du résonateur (12), laquelle comprend ledit au moins un milieu actif de laser (LM) et couple de manière neutre pour les modes de résonateur les états de champ de rayonnement correspondant aux mêmes modes de résonateur, est agencée entre le premier et deuxième plan virtuel de séparation (22, 32), de sorte que l'unité d'amplification est optiquement indépendante du résonateur, et que le dimensionnement du résonateur et la définition des modes de résonateur sont indépendants des propriétés optiques de l'unité d'amplification,

dans lequel l'unité d'amplification (14) comprend au moins un module d'amplificateur (50) comportant ledit au moins un milieu actif de laser (LM),

dans lequel ledit au moins un module d'amplificateur (50) se comporte de manière optiquement neutre pour les modes de résonateur,

dans lequel chaque module d'amplificateur (50) s'étend entre un premier plan d'extrémité virtuel de module (52) et un deuxième plan d'extrémité virtuel de module (54) et est dimensionné optiquement de sorte que celui-ci, lorsque le système d'amplificateur laser fonctionne, pour au moins une puissance moyenne à l'intérieur d'une plage de puissances prévue, transforme un profil d'intensité représentant des états de champ de rayonnement, d'un champ de rayonnement de module d'amplificateur (60) dans un des plans d'extrémité de module (52) dans l'autre plan d'extrémité de module (54) dans au moins une zone centrale (Z) avec maintien d'une forme de profil d'intensité,

dans lequel un premier des plans virtuels d'extrémité de module (52) est couplé au premier plan virtuel de séparation (22) et un deuxième des plans virtuels d'extrémité de module (54) est couplé au deuxième plan virtuel de séparation (32),

dans lequel au moins dans la zone centrale (Z), les valeurs d'intensité, représentant différentes valeurs d'état de champ de rayonnement, du profil d'intensité (IP) normalisé à sa valeur maximale dans les endroits respectivement affectés les uns aux autres par reproduction dans les plans d'extrémité de module (52, 54), s'écartent les unes des autres au maximum de 20 % de la valeur maximale,

dans lequel, sachant qu'il doit être entendu par affectation des différents endroits par reproduction le fait que, dans le cas d'une reproduction exacte, les différents endroits sont clairement affectés les uns aux autres, et que dans le cas d'une reproduction imprécise, l'affectation s'effectue par le fait que, avec l'image imprécise d'un endroit d'un plan de module dans l'autre plan de module, le centre de gravité de l'image imprécise de cet endroit doit être considéré comme l'endroit à affecter,

dans lequel ledit au moins un module d'amplificateur (50) transforme un profil de phase (PP) représentant des états de champ de rayonnement d'un plan d'extrémité de module (52, 54) à l'autre plan d'extrémité de module (54, 52) au moins dans une zone centrale (Z) avec maintien d'une forme de profil de phase,

et dans lequel la différence entre les valeurs de phase des profils de phase (PP) dans les endroits respectivement affectés les uns aux autres par reproduction dans les plans d'extrémité de module (52, 54) à chaque emplacement est inférieure à 4 rad.

2. Système d'amplificateur laser selon la revendication 1, **caractérisé en ce que** ledit au moins un module d'amplificateur (50) est couplé de manière optiquement neutre aux plans virtuels de séparation (16, 18).

3. Système d'amplificateur laser selon la revendication 1 ou 2, **caractérisé en ce que** la zone centrale (Z) correspond à la plus petite zone de section transversale du champ de rayonnement de module d'amplificateur (60), qui englobe 80 % de la puissance totale du champ de rayonnement de module d'amplificateur (60).

4. Système d'amplificateur laser selon l'une quelconque des revendications précédentes, **caractérisé en ce que** l'unité d'amplification (14) comprend un module d'amplificateur (50) pour lequel un premier des plans d'extrémité de module (52) coïncide avec le premier plan de séparation (22) et un deuxième des plans d'extrémité de module (54) coïncide avec le deuxième plan de séparation (32).

5. Système d'amplificateur laser selon l'une quelconque des revendications 1 à 3, **caractérisé en ce que** l'unité d'amplification (14) comprend plusieurs modules d'amplificateur (50) et **en ce que** plusieurs modules d'amplificateur (50) formant un ensemble sont notamment agencés de manière successive entre les plans de séparation (22, 32) et **en ce que**, pour les modules d'amplificateur (50) successifs, respectivement un premier plan d'extrémité de module (52) est couplé de manière optiquement neutre à un deuxième plan d'extrémité de module (54) et **en ce que**, pour l'ensemble des modules d'amplificateur (50), le premier plan d'extrémité de module (52) d'un premier module d'amplificateur (50a) est couplé optiquement à l'un des plans de séparation (22) et le deuxième plan d'extrémité de module (54n) du dernier module d'amplificateur (50n) est couplé optiquement à l'autre plan de séparation (32).

6. Système d'amplificateur laser selon la revendication 5, **caractérisé en ce que**, pour les modules d'amplificateur (50) successifs, respectivement un premier plan d'extrémité de module (52) coïncide avec un deuxième plan d'extrémité de module (54) et **en ce que**, pour l'ensemble des modules d'amplificateur (50), le premier plan d'extrémité de module (52) d'un premier module d'amplificateur (50a) est couplé de manière optiquement neutre à l'un des plans de séparation (22) et le plan d'extrémité de module (54n) du dernier module d'amplificateur (50n) est couplé de manière optiquement neutre à l'autre plan de séparation (32).

7. Système d'amplificateur laser selon l'une quelconque des revendications précédentes, **caractérisé en ce qu'**un premier plan d'extrémité de module (52) dudit au moins un module d'amplificateur (50) est couplé de manière optiquement neutre au premier plan de séparation (22) et un deuxième plan d'extrémité de module (54) dudit au moins un module d'amplificateur (50) est couplé de manière optiquement neutre au deuxième plan de séparation (32) et **en ce que** ledit au moins un module d'amplificateur (50), lorsque le système d'amplificateur laser fonctionne, pour au moins une puissance moyenne à l'intérieur d'une plage de puissances prévue entre les plans d'extrémité de module (52, 54), constitue un champ de rayonnement de module d'amplificateur (60), lequel couple de manière optiquement quasiment neutre les états de champ de rayonnement les uns aux autres dans les plans d'extrémité de module (52, 54), au moins dans une zone centrale (Z), dans lequel le module d'amplificateur (50) représente un système optique (80), dont la matrice ABCD présente les valeurs

$$0{,}97 < |A| < 1{,}03$$

$$-0{,}2 \text{ m} < B < 0{,}2 \text{ m}$$

$$-0{,}2 \text{ }^{1}/_{m} < C < 0{,}2 \text{ }^{1}/_{m}$$

$$0{,}97 < |D| < 1{,}03$$

8. Système d'amplificateur laser selon la revendication 7, **caractérisé en ce que** plusieurs modules d'amplificateur (50) formant un ensemble sont agencés de manière successive entre les plans de séparation (22, 32) et **en ce que**, pour les modules d'amplificateur (50) successifs, respectivement un premier plan d'extrémité de module (52) est couplé de manière optiquement neutre à un deuxième plan d'extrémité de module (54) et **en ce que**, pour l'ensemble des modules d'amplificateur (50), le premier plan d'extrémité de module (52) d'un premier module d'amplificateur (50a) est couplé de manière optiquement neutre à l'un des plans de séparation (22) et un deuxième plan d'extrémité de module (54) du dernier module d'amplificateur (50n) est couplé de manière optiquement neutre à l'autre plan de séparation (32).

9. Système d'amplificateur laser selon l'une quelconque des revendications précédentes, **caractérisé en ce que** le milieu actif de laser (LM) est agencé dans au moins un corps solide (62, 64, 56', 58') et **en ce que** ledit au moins un corps solide (62, 64, 56', 58') s'étend notamment transversalement à l'axe optique (OA).

10. Système d'amplificateur laser selon la revendication 9, **caractérisé en ce que** ledit au moins un corps solide (62, 64, 56', 58') présente transversalement à l'axe optique (OA) dans chaque direction, une étendue qui est supérieure à l'étendue en direction de l'axe optique (OA).

11. Système d'amplificateur laser selon la revendication 9 ou 10, **caractérisé en ce que** ledit au moins un corps solide (62, 64, 56', 58') est agencé dans le module d'amplificateur (50) entre les plans d'extrémité de module (52, 54).

12. Système d'amplificateur laser selon l'une quelconque des revendications 9 à 11, **caractérisé en ce que** ledit au moins un corps solide (62, 64, 56', 58') est agencé dans une zone du champ de rayonnement de module d'amplificateur (60), dans lequel la section transversale de champ de rayonnement de module d'amplificateur (76, 78) de ce dernier est inférieure à un spot lumineux de pompage (72, 74).

13. Système d'amplificateur laser selon l'une quelconque des revendications précédentes, **caractérisé en ce qu'**un élément de correction de phase (92) modifiant une longueur d'onde optique est agencé dans un plan de reproduction (84) du module d'amplificateur (50).

14. Procédé de construction d'un système d'amplificateur laser comprenant un résonateur (12) doté d'éléments optiques de résonateur (24, 34), qui définissent le parcours d'un champ de rayonnement de résonateur (26, 36) se propageant le long d'un axe optique (OA), et au moins un milieu actif de laser (LM), procédé dans lequel le résonateur (12) est réalisé sous la forme d'un résonateur à fente (12), qui présente une première partie de résonateur (20) s'étendant à partir d'un premier plan virtuel de séparation (22) et une deuxième partie de résonateur (30) s'étendant à partir d'un deuxième plan virtuel de séparation (32), dans lequel les parties de résonateur (20, 30) sont dimensionnées optiquement de telle sorte que le champ de rayonnement de résonateur (26, 36) présente dans chacun des plans virtuels de séparation (22, 32) des états de champ de rayonnement correspondant aux mêmes modes de résonateur, dans lequel une unité d'amplification (14) indépendante optiquement du résonateur (12), laquelle comprend ledit au moins un milieu actif de laser (LM) et couple de manière neutre pour les modes de résonateur les états de champ de rayonnement correspondant aux mêmes modes de résonateur, est agencée entre le premier et le deuxième plan virtuel de séparation (22, 32), de sorte que l'unité d'amplification est indépendante optiquement du résonateur et que le dimensionnement du résonateur et la définition des modes de résonateur sont indépendants des propriétés optiques de l'unité d'amplification, dans lequel l'unité d'amplification (14) comprend au moins un module d'amplificateur (50) comportant ledit au moins un milieu actif de laser (LM), dans lequel ledit au moins un module d'amplificateur (50) se comporte de manière optiquement neutre pour les modes de résonateur, dans lequel chaque module d'amplificateur (50) s'étend entre un premier plan d'extrémité virtuel de module (52) et un deuxième plan d'extrémité virtuel de module (54) et est dimensionné optiquement de sorte que celui-ci, lorsque le système d'amplificateur laser fonctionne, pour au moins une puissance moyenne à l'intérieur d'une plage de puissances prévue, transforme un profil d'intensité, représentant des états de champ de rayonnement, d'un champ de rayonnement de module d'amplificateur (60) dans un des plans d'extrémité de module (52) dans l'autre plan d'extrémité de module (54) dans au moins une zone centrale (Z), avec maintien d'une forme de profil d'intensité, dans lequel un premier des plans virtuels d'extrémité de module (52) est couplé au premier plan virtuel de séparation (22) et un deuxième des plans virtuels d'extrémité de module (54) est couplé au deuxième plan virtuel de séparation (32), dans lequel au moins dans la zone centrale (Z), les valeurs d'intensité, représentant différentes valeurs d'état de champ de rayonnement, du profil d'intensité (IP) normalisé à sa valeur maximale dans les endroits respectivement affectés les uns aux autres par reproduction, dans les plans d'extrémité de module (52, 54), s'écartent les unes des autres au maximum de 20 % de la valeur maximale, dans lequel, sachant qu'il doit être entendu par affectation des différents endroits par reproduction le fait que, dans le cas d'une reproduction exacte, les différents endroits sont clairement affectés les uns aux autres, et que dans le cas d'une reproduction imprécise, l'affectation s'effectue par le fait que, avec l'image imprécise d'un endroit d'un plan de module dans l'autre plan de module, le centre de gravité de l'image imprécise de cet endroit doit être considéré comme l'endroit à affecter, dans lequel ledit au moins un module d'amplificateur (50) transforme un profil de phase (PP) représentant des états de champ de rayonnement d'un plan d'extrémité de module (52, 54) à l'autre plan d'extrémité de module (54, 52) au moins dans une zone centrale (Z) avec maintien d'une forme de profil de phase, et dans lequel la différence entre les valeurs de phase des profils de phase (PP) dans les endroits respectivement affectés les uns aux autres par reproduction

dans les plans d'extrémité de module (52, 54) à chaque emplacement est inférieure à 4 rad.

**15.** Procédé de construction d'un système d'amplificateur laser selon la revendication 14, **caractérisé en ce qu'**un premier plan d'extrémité de module (52) dudit au moins un module d'amplificateur (50) est couplé de manière optiquement neutre au premier plan de séparation (22) et un deuxième plan d'extrémité de module (54) dudit au moins un module d'amplificateur (50) est couplé de manière optiquement neutre au deuxième plan de séparation (32) et **en ce que** ledit au moins un module d'amplificateur (50), lorsque le système d'amplificateur laser fonctionne, pour au moins une puissance moyenne à l'intérieur d'une plage de puissances prévue entre les plans d'extrémité de module (52, 54), constitue un champ de rayonnement de module d'amplificateur (60), lequel couple de manière optiquement quasiment neutre les états de champ de rayonnement les uns aux autres dans les plans d'extrémité de module (52, 54), au moins dans une zone centrale (Z), dans lequel le module d'amplificateur (50) représente un système optique (80), dont la matrice ABCD présente les valeurs

$$0,97 \quad < \quad |A| \quad < 1,03$$

$$-0,2 \ m \quad < \quad B \quad < 0,2 \ m$$

$$-0,2 \ ^1/_m \quad < \quad C \quad < 0,2 \ ^1/_m$$

$$0,97 \quad < \quad |D| \quad < 1,03$$

**FIG.1**

EP 2 425 504 B1

# FIG.2

EP 2 425 504 B1

FIG.3

# FIG.4

# FIG.9

FIG.5

EP 2 425 504 B1

FIG.6

EP 2 425 504 B1

# FIG.7

EP 2 425 504 B1

FIG.8

# FIG.10

FIG.11

EP 2 425 504 B1

# FIG.12

EP 2 425 504 B1

# FIG.13

EP 2 425 504 B1

FIG.14

FIG.15

EP 2 425 504 B1

# FIG.16

EP 2 425 504 B1

# FIG.17

EP 2 425 504 B1

# FIG.18

EP 2 425 504 B1

## FIG.19

**FIG.20**

**FIG.21**

EP 2 425 504 B1

# FIG.22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1677394 A

- EP 0632551 A

**In der Beschreibung aufgeführte Nicht-Patentliteratur**

- **A. E. SIEGMANN.** Lasers. *Univ. Science Books,* 1986, 581
- Lasers. **A. E. SIEGMANN.** Univ. Science Books. 1986, 581

- Imaging of coherent fields through lenslike systems. *OPTICS LETTERS,* 15. Oktober 1994, vol. 19 (20), 1607
- **A. E. SIEGMANN.** Lasers. *Univ. Science,* 1986, 581